# EUROPÄISCHE PATENTSCHRIFT

(11) **EP 3 580 254 B1**
(45) Veröffentlichungstag und Bekanntmachung des Hinweises auf die Patenterteilung: **11.05.2022**
(21) Anmeldenummer: 18702294.2
(22) Anmeldetag: 02.02.2018
(51) Int. Cl.: D06M 15/227, D06M 15/653, C08G 18/61, C08G 18/78, C08G 18/79, C08G 18/22, C08G 18/80, C08G 18/69, C09D 175/04, C08G 18/28, D06M 15/564

(54) **POLYMERE ZUR HYDROPHOBEN UND OLEOPHOBEN TEXTILAUSRÜSTUNG**
POLYMERS FOR THE HYDROPHOBIC AND OLEOPHOBIC FINISHING OF TEXTILES
POLYMÈRES POUR L'APPRÊT TEXTILE HYDROPHOBE ET OLÉOPHOBE

(30) Priorität: 09.02.2017 EP 17155342
(43) Veröffentlichungstag der Anmeldung: 18.12.2019
(73) Patentinhaber: Evonik Operations GmbH, 45128 Essen (DE)
(72) Erfinder: AMAJJAHE, Sadik, 40591 Düsseldorf (DE); PLATTE, Gabriele, 44581 Castrop-Rauxel (DE); WIRZ, Kai Oliver, 23120 Moseley, VA (US); PEGGAU, Jörg, 45357 Essen (DE); RADLOFF, Sarah, 44805 Bochum (DE); STREMMER, Kathrin, 45289 Essen (DE)
(74) Vertreter: Evonik Patent Association
(86) Internationale Anmeldenummer: PCT/EP2018/052646
(87) Internationale Veröffentlichungsnummer: WO 2018/146016

(56) Entgegenhaltungen:
- WO-A1-2010/108676
- WO-A1-2016/049278
- DE-A1- 2 448 133
- US-A1- 2012 148 774

## Beschreibung

Die Erfindung betrifft Zubereitungen auf Basis von Wasser und/oder organischen Lösemitteln und deren Anwendung als Appretur auf Flächengebilden.

Es ist bekannt, dass zum Appretieren von Flächengebilden Zubereitungen auf wässriger Basis oder Lösemittelbasis aus Silikonölen, Paraffinen, Fluorcarbonpolymeren (Fluorcarbon wird im Folgenden mit FC abgekürzt) und anderen Additiven verwendet werden, welche dem appretierten Flächengebilde besondere hydrophobe Effekte verleihen, um den Beanspruchungen gegenüber Regen, Spritzwasser oder Feuchtigkeit aus anderen Quellen, während des Gebrauchs des Flächengebildes gerecht zu werden.

Während die Erzeugung von wasserabweisenden Effekten mit Produkten auf Basis von Paraffinen und Silikonen lediglich eine Hydrophobierung der Textilfaser bewirkt, führen FC-Polymere zusätzlich zu einer Schmutz- und Ölabweisung. FC-Ausrüstungen kommen für eine große Anzahl von Artikeln in Frage. Sie werden sowohl im Bekleidungs- und Heimtextilienbereich, als auch im Sektor der technischen Textilien eingesetzt. Üblicherweise basieren Produkte für die FC-Ausrüstung auf Polyurethanen oder Polyacrylaten, welche Perfluoralkylgruppen unterschiedlicher Kettenlänge enthalten. Die Applikation der wässrigen Produkte erfolgt meist über das Auszieh- und Foulardverfahren durch Sprühen, Schäumen oder Pflatschen, häufig in Kombination mit anderen Additiven. Diese Additive können z. B. wärmehärtende Harze auf Basis von Methylolverbindungen sein, die Formbeständigkeit, Waschechtheit und Steife bewirken. So offenbaren US6127507 und WO 2010/025398 derartige Fluoralkyl-haltige Polymere.

Des Weiteren werden auch Stoffe eingesetzt, die als Extender bezeichnet werden. Üblicherweise handelt es sich dabei um fettsäuremodifizierte Melaminharze, Gemische aus Wachs und Zirkoniumsalzen oder blockierte Polyisocyanate. Letztere werden häufig eingesetzt, um die wasser- und ölabweisenden Effekte der FC-Ausrüstung zu verbessern und die Waschpermanenz zu erhöhen.

Nachteilig ist, dass schon nach wenigen Waschdurchgängen sowohl die Hydrophob- als auch die Oleophob-Wirkung aufgrund der Desorientierung der aktiven FC-Reste an den Polymermolekülen stark reduziert wird, sofern nicht durch thermische Behandlung eine Reorientierung stattfinden kann. Dies bedeutet, dass solcherart behandelte Flächengebilde nach einer Wäsche einer Hitzebehandlung bedürfen, um die gewünschten Effekte zu revitalisieren. So ist beispielsweise ein Bügeln oder mindestens ein Trocknen im Wäschetrockner bei Temperaturen > 80°C Voraussetzung für gute Phobiereigenschaften. Stark nachteilig ist ihre Langlebigkeit in Natur und Organismus. So reichern sich FC-Polymere bzw. deren Abbauprodukte wie Perfluoroctansäure in Organismen an, und werden kaum aus dem menschlichen Körper ausgeschieden. Studien haben auf leberschädigende, reproduktionstoxische und krebserregende Eigenschaften hingewiesen. Zu den wichtigsten Emissionsquellen gehören demnach schmutz- und wasserabweisend ausgerüstete Teppiche und Textilien sowie Feuerlöschschaum.

Neben einer guten Anfangshydrophobie ist auch die Beständigkeit der Appretur gegenüber mehrfachen Wäschen ein wichtiger Punkt. Es wurden deshalb schon frühzeitig Zubereitungen entwickelt, welche die ungenügende Beständigkeit gegenüber Waschprozessen verbessern sollten. So werden in der DE 1017133 B Hydrophobiermittel beschrieben, welche durch Mischung eines Kondensationsproduktes aus Hexamethylolmelaminhexamethylether, Stearinsäure, Stearinsäurediglycerid und Triethanolamin mit Paraffin herzustellen sind. Die so erhaltenen schuppen- oder brockenartigen Produkte werden vor der Anwendung durch Aufschmelzen mit heißem Wasser oder Dampf und unter Zusatz von Essigsäure in eine aus wässrigen Flotten heraus applizierfähige Emulsionsform gebracht. Bei den damit ausgerüsteten Flächengebilden und Fasermaterialien hat sich allerdings als nachteilig herausgestellt, dass durch die relativ hohe Aufbringungsmenge, den chemischen Charakter der Zubereitung und insbesondere durch die Vernetzung der fettsäuremodifizierten Methyloltriazinverbindung mit sich selbst sowie den funktionellen Gruppen von Substraten auf nativer Basis eine deutliche Verhärtung des Griffcharakters einherging.

Weiterhin offenbart US5589563 lineare Block-Copolymere hergestellt aus Disocyanaten durch Addition mit ausschließlich difunktionellen Verbindungen.

In WO 2016/049278 werden Nicht-fluorierte Urethane als Beschichtungsmaterialien offenbart, deren Isocyanat-Basisstruktur Zuckeralkohole darstellen.

Verfahren zur Imprägnierung von Textilien durch Auftragen von vernetzbaren Organopolysiloxanen sind bereits seit längerem bekannt. Die Vernetzung kann durch Kondensation von Si-H- und Si-OH-funktionellen Organopolysiloxanen mit Hilfe eines Katalysators wie in US 4098701 beschrieben erfolgen. Ebenso ist eine Vernetzung durch eine Anlagerung von Si-H-funktionellen Organopolysiloxanen an SiC-gebundene olefinische Reste möglich (US 4154714 und DE 3332997 A1). Aufgrund des reaktiven Charakters derartiger Organopolysiloxane ist die Herstellung lagerstabiler Zubereitungen schwierig. Häufig können die Komponenten erst direkt vor der Verwendung gemischt werden, was die Handhabung in der Praxis umständlich macht. WO 2000/029663 A2 beschreibt Zubereitungen für die permanente Faserausrüstung, die Umsetzungsprodukte von Polyisocyanat funktionellen Verbindungen mit silikonfreien und/oder silikonhaltigen Weichgriffmitteln enthalten und ausweislich der Beispiele bevorzugt einen hydrophilierenden Rest aufweisen.

DE 19744612 A1 beschreibt Emulsionen von Organosiliziumverbindungen für die Hydrophobierung von mineralischen Baustoffen und Baubeschichtungen sowie Holz. Die wässrigen Emulsionen enthalten langkettige Kohlenwasserstoffketten modifizierte Alkoxysilane. Eine Anwendung auf Textilien wird jedoch nicht offenbart. Weiterhin beschreibt US 8318867 B2 Copolymere auf Basis eines Hart-Weich Konzeptes mit Polyurethanen als Hart-Segment, Polybutadienen und Polycarbonaten als Weichsegment und Polyfluoralkylverbindungen als oberflächenaktive Substanz zur Ausrüstung und Additivierung von Kunstoffen und Erhöhung der thermischen Stabilität derselben. Mit diesen Systemen lassen sich sehr gute wasserabweisende Effekte erzielen, jedoch sind relativ hohe Einsatzmengen erforderlich. Dies führt dazu, dass die Atmungsaktivität des ausgerüsteten Textils verringert wird. Nach Wäschen muss, ähnlich wie bei den mit den mit FC-haltigen Zubereitungen behandelten Textilien eine thermische Behandlung, z. B. im Wäschetrockner, oder durch Bügeln, erfolgen, um das ursprüngliche Effektniveau wieder zu erhalten.

DE 2448133 A1 beschreibt die Beschichtung von Leder, Spaltleder und textilen Flächengebilden mit Polyurethan-Reaktivsystemen unter Verwendung von weichmacherhaltigen Isocyanatpräpolymeren.

Ein in der Natur bekannter Vertreter mit wasserabweisendem Effekt ist die Lotuspflanze. Wasser perlt in Tropfen ab und nimmt dabei auch alle Schmutzpartikel auf der Oberfläche mit. Verantwortlich dafür ist eine komplexe mikro- und nanoskopische Architektur der Oberfläche, die die Haftung von Schmutzpartikeln minimiert. Der Nachteil besteht darin, dass eine leichte Verringerung der Oberflächenspannung der Flüssigkeit (zum Beispiel durch Zugabe von Milch) bewirkt, dass diese nicht mehr abgewaschen werden kann. Die Ursache der Selbstreinigung liegt in einer hydrophoben Doppelstruktur der Oberfläche. Diese Doppelstruktur wird aus einer charakteristisch geformten Epidermis und sich auf ihr befindenden Wachsen gebildet. Diese aufgelagerten Wachse sind hydrophob und bilden den zweiten Teil der Doppelstruktur. Somit hat Wasser nicht mehr die Möglichkeit, in die Zwischenräume der Blattoberfläche zu gelangen, was zur Folge hat, dass sich die Kontaktfläche zwischen Wasser und Oberfläche verringert.

Wasser- und ölabweisende Systeme sind in der Insektenwelt bekannt (Interface Science Nr. 14, Seite 270 - 280, 2009), die sogenannten Collembola, auch Springschwänze genannt. Der Panzer kann selbst durch Aceton und Ethanol nicht benetzt werden. Dieser superhydrophobe Panzer resultiert aus seiner einzigartigen Struktur auf Basis von Proteinen und Wachsen.

Überraschenderweise weisen Copolymere enthaltend neben Polysiloxanen weitere Komponenten (gleichbedeutend mit dem Begriff Teilstrukturen) wie Polyisocyanate und größere organische Kohlenwasserstoffreste wie in den Ansprüchen beschrieben sowohl hydrophobe als auch oleophobe Eigenschaften auf.

Gegenstand der vorliegenden Erfindung sind Copolymere umfassend die Bestandteile oder bestehend aus den Bestandteilen, vorzugsweise bestehend aus den Bestandteilen:
Komponente a), die mindestens eine Biuret- oder Isocyanurat-Teilstruktur aufweist,
Komponente b), ausgewählt aus Polysiloxanen und Polykohlenwasserstoffen, vorzugsweise aus Polysiloxanen,
Komponente c), welche einen von Komponente b) unterschiedlichen Kohlenwasserstoff enthält, der mindestens 6 Kohlenstoffatome und höchstens 3 Heteroatome ausgewählt aus der Gruppe N, O, S aufweist,
wobei Komponente b) über mindestens zwei Positionen mit 2 unterschiedlichen oder gleichen Komponenten a) verknüpft ist, und wobei die Copolymere frei von Isocyanatgruppen sind.

Ein weiterer Gegenstand der vorliegenden Erfindung ist ein Verfahren zur Herstellung der erfindungsgemäßen Copolymere.

Ein weiterer Gegenstand der vorliegenden Erfindung sind Zusammensetzungen enthaltend die erfindungsgemäßen Copolymere oder die erfindungsgemäßen Verfahrensprodukte.

Ein weiterer Gegenstand der vorliegenden Erfindung sind wässrige Emulsionen enthaltend die erfindungsgemäßen Copolymere oder die erfindungsgemäßen Verfahrensprodukte.

Ein weiterer Gegenstand der vorliegenden Erfindung ist die Verwendung der erfindungsgemäßen Copolymere, der erfindungsgemäßen Verfahrensprodukte sowie der erfindungsgemäßen Zusammensetzungen zur Ausrüstung von Flächengebilden.

Ein weiterer Gegenstand der vorliegenden Erfindung ist ein Verfahren zur Flüssigkeits- und Schmutz-abweisenden Imprägnierung von textilen Flächengebilden durch Verwendung der erfindungsgemäßen Copolymere.

Ein weiterer Gegenstand sind phobierte textile Flächengebilde aufweisend die erfindungsgemäßen Copolymere unter Erhalt oder Verbesserung der haptischen Eigenschaften.

Die erfindungsgemäßen Copolymere weisen ökologische Vorteile gegenüber den FC-Polymeren auf:
- Reduktion der Umweltbelastung
- umweltverträglichere Polymere, die auch langfristig die Umwelt nicht schädigen
- keine Verwendung von persistenten Verbindungen.

Ein weiterer Vorteil der erfindungsgemäßen Copolymere ist die überaus gute mechanische Stabilität auf Flächengebilden.

Ein weiterer Vorteil der Erfindung ist, dass die mit den erfindungsgemäßen Copolymeren ausgerüsteten Textilien eine unveränderte Atmungsaktivität aufweisen.

Ein weiterer Vorteil der Erfindung ist, dass die mit den erfindungsgemäßen Copolymeren ausgerüsteten Textilien auch nach mehreren Wäschen ein hohes Effektniveau, ohne eine weitere thermische Behandlung, aufweisen.

Ein weiterer Vorteil der Erfindung ist, dass die Beschichtung von Textilien mit den erfindungsgemäßen Copolymeren eine Verbesserung der haptischen Eigenschaften aufweist und zu einem angenehmen Tragekomfort führt.

Ein weiterer Vorteil der erfindungsgemäßen Copolymere ist deren vielseitige Anwendbarkeit auf Cellulose- und Lignin basierte Fasern.

Ein weiterer Vorteil ist die Verringerung der Abwasserbelastung gegenüber dem Stand der Technik sowohl bei der Herstellung als auch bei der Nutzung.

Die erfindungsgemäßen Copolymere, das erfindungsgemäße Verfahren zur Herstellung der Copolymere, und die erfindungsgemäßen Zusammensetzungen und wässrige Emulsionen sowie deren erfindungsgemäße Verwendung werden nachfolgend beschrieben. Werden nachfolgend Gehaltsangaben (ppm oder %) gemacht, so handelt es sich, wenn nicht anders angegeben, um Angaben in Gewichts-% oder Gewichts-ppm (wppm). Bei Zusammensetzungen beziehen sich die Gehaltsangaben wenn nicht anders angegeben auf die Gesamtzusammensetzung. Werden nachfolgend Mittelwerte angegeben, so handelt es sich, wenn nicht anders angegeben um Zahlenmittel. Werden Molmassen verwendet, handelt es sich, wenn nicht ausdrücklich anders vermerkt um gewichtsmittlere Molmassen Mw. Werden im Umfang dieser Erfindung Werte für Viskositäten angegeben, handelt es sich falls nicht anders vermerkt um dynamische Viskositäten, die mit dem Fachmann geläufigen Methoden ermittelt werden können. Werden nachfolgend Messwerte angegeben, so wurden diese Messwerte, wenn nicht anders angegeben, bei einem Druck von 101325 Pa und einer Temperatur von 23°C ermittelt.

Die verschiedenen Fragmente in der Formel (I) und (VII) sind statistisch verteilt. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Die in den hier angeführten Formeln (I) und (VII) wiedergegebenen Indexzahlen und die Wertbereiche der angegebenen Indizes verstehen sich als die Mittelwerte der möglichen statistischen Verteilung der tatsächlichen vorhandenen Strukturen und/oder deren Mischungen. Dies gilt auch für als solche an sich exakt wiedergegebene Strukturformeln.

Wo immer Moleküle beziehungsweise Molekülfragmente ein oder mehrere Stereozentren aufweisen oder aufgrund von Symmetrien in Isomere unterschieden werden können oder aufgrund anderer Effekte z.B. eingeschränkter Rotation in Isomere unterschieden werden können, sind alle möglichen Isomere von der vorliegenden Erfindung mit eingeschlossen.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Die hier wiedergegebenen Indexzahlen und die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I) und Formel (VII).

Bevorzugt besteht das Copolymer aus den Komponenten a), b) und Komponente c), wobei jeweils eine oder mehrere ausgewählt aus den Komponenten a), b) und c) enthalten sein können.

Das erfindungsgemäße Copolymer ist frei von Isocyanatgruppen.

Weiter bevorzugt ist das Copolymer frei von Halogenatomen, besonders bevorzugt frei von Fluoratomen.

Weiter bevorzugt ist das Copolymer frei von Polyetherstrukturen, mehr bevorzugt frei von aneinander gebundenen Oxyalkylen-Fragmenten.

Weiter bevorzugt weist das Copolymer die Komponenten a) und c) im Verhältnis von Anzahl c) dividiert durch Anzahl a) von 1 bis 3, mehr bevorzugt von 1,3 bis 2,7, besonders bevorzugt von 1,6 bis 2,4 und insbesondere bevorzugt von 1,8 bis 2,2 auf.

Bevorzugt weist die Komponente a) jeweils mehrere Biuret- oder Isocyanurat-Teilstrukturen auf, mehr bevorzugt von mehr als 1 bis zu 4, weiter mehr bevorzugt von 1,2 bis 3, besonders bevorzugt von 1,3 bis 2,5 und insbesondere bevorzugt von 1,4 bis 2 Biuret- oder Isocyanurat-Teilstrukturen auf.

Mehr bevorzugt weist das erfindungsgemäße Copolymer die Komponenten a) und c) im Verhältnis von Anzahl c) dividiert durch Anzahl a) von 1 bis 3, mehr bevorzugt von 1,3 bis 2,7, besonders bevorzugt von 1,6 bis 2,4 und insbesondere bevorzugt von 1,8 bis 2,2 auf; und weist in Komponente a) jeweils mehrere Biuret- oder Isocyanurat-Teilstrukturen auf, mehr bevorzugt von mehr als 1 bis zu 4, weiter mehr bevorzugt von 1,2 bis 3, besonders bevorzugt von 1,3 bis 2,5 und insbesondere bevorzugt von 1,4 bis 2 Biuret- oder Isocyanurat-Teilstrukturen auf.

Weiter bevorzugt ist Komponente a) unabhängig voneinander gleiche oder verschiedene Biuret-Teilstrukturen der Formel (III) und Isocyanurat-Teilstrukturen der Formel(IV) 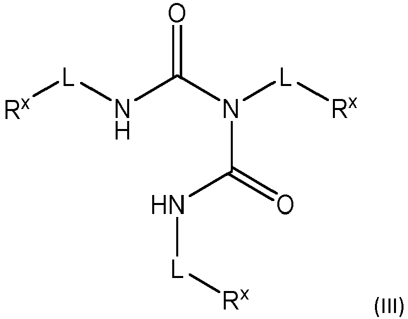 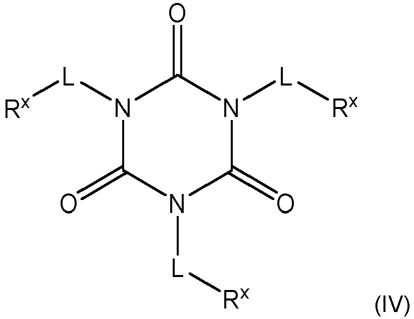 worin
- L: divalente Reste von Tolyl (2,4-; 2,6-), Ethylphenyl, 1,5-Naphthyl, α,ω-Tetramethylen, α,ω-Hexamethylen, α,ω-Dodecamethylen, α,ω-2-Methylpentamethylen, α,ω-2,2,4-Trimehtaylhexamethylen, Cyclohexyl (1,4-), 1-Methylcyclohexyl (1,3-; 1,4-; 2,6-), 2,2,6-Trimethylcyclohexyl, Isophoron (3,3,5-Trimethylcyclohexyl), 4,4'-Dicyclohexylmethyl, 4,4'-Dicyclohexylpropan-(2,2), 4,4'-Diphenylmethan, vorzugsweise Hexamethylen, 4,4'-Diphenylmethan und Isophoron.

So leiten sich die divalenten Reste L von den Diisocyanaten ausgewählt aus 2,4-/2,6-Toluoldiisocyanat (TDI), Diphenylmethan-4,4'-diisocyanat (MDI), Naphthyl-1,5-diisocyanat (NDI), Dicyclohexylmethan-4,4'-diisocyanat, 3-Isocyanatomethyl-3,3,5-trimethylcyclohexylisocyanat (Isophorondiisocyanat = IPDI), Butan-1,4-diisocyanat, Hexan-1,6-diisocyanat (HDI), 2-Methylpentan-1,5-diisocyanat, 2,2,4-Trimethylhexan-1,6-diisocyanat (TMDI), Dodecan-1,12-diisocyanat, Cyclohexan-1,4-diisocyanat, 3,3'-Dimethyl-dicyclohexylmethan-4,4'-diisocyanat, Dicyclohexylpropan-(2,2)-4,4'-diisocyanat, 3-Isocyanatomethyl-1-methyl-1-isocyanatocyclohexan (MCI), 2-Methylcyclohexan-1,3-diisocyanat ab.
- R^{x}: ist unabhängig voneinander die Bindungsstelle zu Komponente b) und Komponente c),
und dabei im Falle der Bindung zu Komponente b) eine Urethangruppe oder Harnstoffgruppe darstellt,
und dabei im Falle der Bindung zu Komponente c) eine Urethangruppe, eine Harnstoffgruppe oder eine Thioharnstoffgruppe darstellt,
   wobei diese Urethan-, Harnstoff- und Thioharnstoffgruppen über das Stickstoffatom an Formel (III) und Formel (IV) gebunden sind,
oder R^{x} stellt eine Bindung zu einer weiteren Biuret- oder Isocyanurat-Teilstruktur dar, wobei bevorzugt Biuret- mit Biuret-Teilstrukturen und bevorzugt Isocyanuratmit Isocyanurat-Teilstrukturen verbunden sind.

Die Bindung zwischen Komponente a) und Komponente b) kann durch Formel (V) wiedergegeben werden:

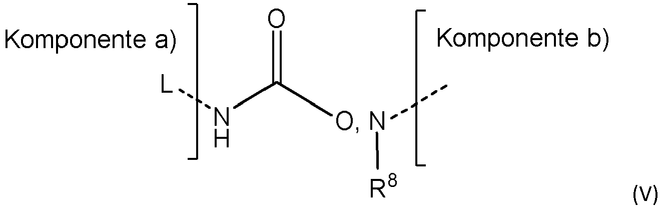

Die Bindung zwischen Komponente a) und c) kann durch Formel (VI) wiedergegeben werden: 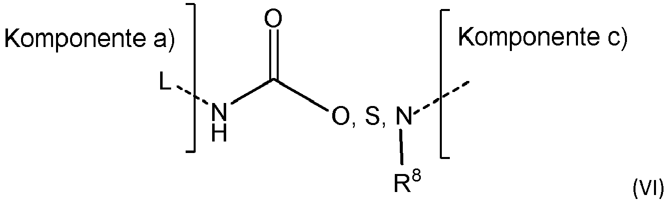 wobei
- R⁸: Wasserstoff oder ein substituiertes oder unsubstituiertes C₁-C₃₀-Alkyl, bevorzugt substituiertes oder unsubstituiertes C₁-C₃₀-Alkyl, welches auch durch Heteroatome unterbrochen sein kann, cyclisches C₃-C₃₀-Alkyl, substituiertes oder unsubstituiertes C₆-C₃₀-Aryl ist,
bevorzugt ist R⁸ ein C₁-C₅-Alkyl

Gegebenenfalls können die N-H-Gruppen in den Formeln (V) und (VI) mit weiteren Isocyanatgruppen zu Allophanaten und weiteren Biuretstrukturen reagieren.

Weiter bevorzugt weist die Komponente a) entweder ausschließlich Biuret- oder ausschließlich Isocyanurat-Teilstrukturen auf, wobei besonders bevorzugt die Komponente a) ausschließlich Isocyanurat-Teilstrukturen aufweist.

Weiter bevorzugt ist die Komponente b) ausschließlich an Komponente a) gebunden. Mehr bevorzugt sind die Komponente a) und Komponente b) über Urethan- oder Harnstoffgruppen miteinander verbunden.

Weiter bevorzugt ist die Komponente c) ausschließlich an Komponente a) gebunden. Weiter mehr bevorzugt sind die Komponente a) und Komponente c) über Urethan-, Harnstoff- und/oder Thioharnstoffgruppen miteinander verbunden.

Komponente b) ist ausgewählt aus der Gruppe bestehend aus Polysiloxanen und Polykohlenwasserstoffen. Es ist insbesondere bevorzugt, dass Komponente b) aus der Gruppe bestehend aus Polysiloxanen ausgewählt wird.

Vorzugsweise handelt es sich bei dem Polykohlenwasserstoff der Komponente b) um einen linearen oder verzweigten, gesättigten oder ungesättigten Kohlenwasserstoff. Mehr bevorzugt weist der Polykohlenwasserstoff der Komponente b) eine oder mehrere Doppelbindungen und/oder Dreifachfachbindungen auf, welche isoliert, konjugiert oder kumuliert sein können.

Insbesondere bevorzugt weist der Polykohlenwasserstoff der Komponente b) 20 bis 400 Kohlenstoffatome, weiter bevorzugt 40 bis 200, insbesondere bevorzugt 60 bis 120 Kohlenstoffatome auf.

Weiter bevorzugt ist die Komponente b) ausgewählt aus der Gruppe enthaltend Polysiloxane und Polybutadiene, bevorzugt Polysiloxane.

Bevorzugt ist das Polysiloxan eine Verbindung der Formel (I)

M¹ₐ₁M²ₐ₂M³ₐ₃D¹_{b1}D²_{b2}D³_{b3}T_{c}Q_{d} (I)

mit

| | | | | | |
|---|---|---|---|---|---|
| M¹ | = [R¹₃SiO_{1/2}], | M² | = [R²R¹₂SiO_{1/2}], | M³ | = [R³R¹₂SiO_{1/2}], |
| D¹ | = [R¹₂SiO_{2/2}], | D² | = [R¹R²SiO_{2/2}], | D³ | = [R¹R³SiO_{2/2}], |
| T | = [R¹SiO_{3/2}], | | | | |
| Q | = [SiO_{4/2}], | | | | |

wobei
- a1: 0 bis 20, bevorzugt 1 bis 10, insbesondere 2 bis 5;
- a2: 0 bis 10, bevorzugt 0 bis 5, insbesondere 0;
- a3: 0 bis 20, bevorzugt 1 bis 10, insbesondere 2 bis 5;
- b1: 1 bis 1000, bevorzugt 5 bis 500, insbesondere 10 bis 200;
- b2: 0 bis 10, bevorzugt 0 bis 5, insbesondere 0;
- b3: 0 bis 20, bevorzugt größer 0 bis zu 10, insbesondere 1 bis 5;
- c: 0 bis 10, bevorzugt größer 0 bis zu 5, insbesondere 1 bis 5;
- d: 0 bis 50, bevorzugt 0 bis 10, insbesondere 0 bis 2;
mit der Maßgabe, dass mindestens einer der Indices a3 und b3 größer 1, vorzugsweise die Summe von a3 und b3 mindestens 2 ist;
- R¹: = unabhängig voneinander gleiche oder verschiedene lineare oder verzweigte, gesättigte oder ungesättigte Kohlenwasserstoffreste mit 1 bis 30 Kohlenstoffatomen oder aromatische Kohlenwasserstoffreste mit 6 bis 30 Kohlenstoffatomen,
bevorzugt Alkylreste mit 1 bis 14 Kohlenstoffatomen oder monocylische Aromaten,
weiterhin bevorzugt Methyl, Ethyl, Propyl oder Phenyl, insbesondere Methyl;
- R²: = unabhängig voneinander gleiche oder verschiedene lineare oder verzweigte, gesättigte oder ungesättigte, gegebenenfalls substituierte Kohlenwasserstoffreste, wobei bevorzugte Kohlenwasserstoffe mit 2 bis 30 Kohlenstoffatome, mehr bevorzugt 2 bis 16 Kohlenstoffatome aufweisen, wobei die Substituenten ausgewählt sein können aus Methoxy, Ethoxy, Propoxy, Butoxy, Pentoxy und Glycidyloxy,
bevorzugt ist R² ein Glycidyloxy substituierter Alkylenrest mit 2 bis 6 Kohlenstoffatomen
insbesondere bevorzugt ist R² ein Glycidyloxypropyl-Rest;
- R³: = ist ein zweiwertiger Kohlenwasserstoff mit 2 bis 8 Kohlenstoffatomen, bevorzugt 2 bis 6, insbesondere bevorzugt 2 bis 3, dessen zweite Bindung die Bindungsstelle zu Komponente a) ist über bevorzugt eine Urethan oder Harnstoffgruppe.

Bevorzugt ist das Polybutadien eine Verbindung der Formel (VII). 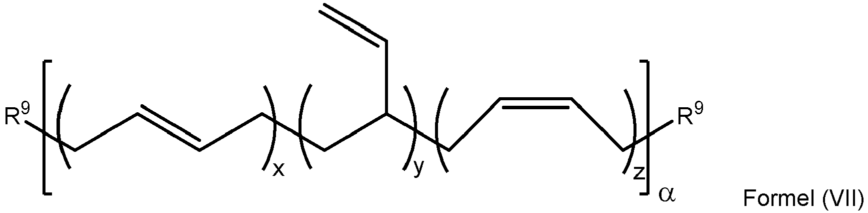
- x: 0,3 bis 0,8, bevorzugt 0,4 bis 0,7, insbesondere bevorzugt 0,5 bis 0,6
- y: 0,01 bis 0,35, bevorzugt 0,1 bis 0,3
- z: 0,1 bis 0,5, bevorzugt 0,15 bis 0,3
die Summe von x, y und z ist 1,
- α: 5 bis 100, bevorzugt 10 bis 50, insbesondere bevorzugt 15 bis 30.
- R⁹: ist die Bindungsstelle zu Komponente a) über bevorzugt eine Urethan oder Harnstoffgruppe

Weiter bevorzugt ist die Komponente c) ein Kohlenwasserstoff der genau eine Bindungsstelle zu Komponente a) aufweist. Der Kohlenwasserstoff weist außer Kohlenstoff und Wasserstoff höchstens 3 Heteroatome auf, mehr bevorzugt höchstens 2 Heteroatome, besonders bevorzugt höchstens ein Heteroatom und insbesondere bevorzugt keine Heteroatome. Falls Komponente c) Heteroatome aufweist, so sind diese ausgewählt aus der Gruppe N, O, S.

Komponente c) kann auch aus einer Mischung von Kohlenwasserstoffen bestehen.

Bevorzugt weist der Kohlenwasserstoff 6 bis 30 Kohlenstoffatome auf, bevorzugt 12 bis 26, mehr bevorzugt, 14 bis 20.

Mehr bevorzugt weist der Kohlenwasserstoff eine ununterbrochene Kette von mindestens 6 Kohlenstoffatomen auf, bevorzugt von 6 bis 21 Kohlenstoffatomen, bevorzugt.

Ebenfalls mehr bevorzugt weist der Kohlenwasserstoff eine oder mehrere Doppelbindungen und/oder Dreifachfachbindungen auf, welche isoliert, konjugiert oder kumuliert sein können.

Besonders bevorzugt weist der Kohlenwasserstoff aromatische Ringe auf, bevorzugt einen oder mehrere Benzolringe, besonders bevorzugt weist einer der aromatischen Ringe die Bindungsstelle zu Komponente a) auf.

Weiter besonders bevorzugt weisen die erfindungsgemäßen Copolymere als Komponente a) unabhängig voneinander gleiche oder verschiedene Biuret-Teilstrukturen der Formel (III) und Isocyanurat-Teilstrukturen der Formel(IV) 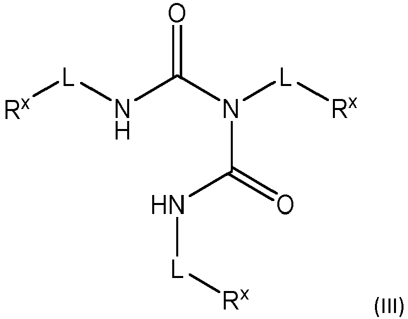 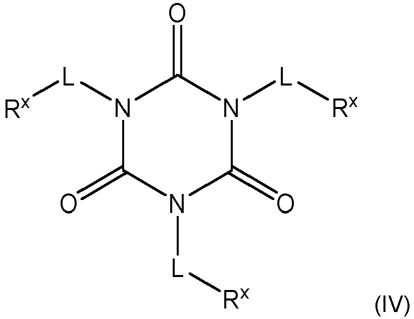 worin
- L: divalente Reste von Tolyl, Ethylphenyl, 1,5-Naphthyl, α,ω-Hexamethylen, Isophoron, 2,2,6-Trimethylcyclohexyl, 4,4'-dicyclohexylmethyl, 4,4'-Diphenylmethan, vorzugsweise Hexamethylen und Isophoron
- R^{x}: unabhängig voneinander die Bindungsstelle zu Komponente b) und Komponente c) ist,
und dabei im Falle der Bindung zu Komponente b) eine Urethangruppe oder Harnstoffgruppe darstellt,
und dabei im Falle der Bindung zu Komponente c) eine Urethangruppe, eine Harnstoffgruppe oder eine Thioharnstoffgruppe darstellt,
   wobei diese Urethan-, Harnstoff- und Thioharnstoffgruppen über das Stickstoffatom an Formel (III) und Formel (IV) gebunden sind,
oder R^{x} stellt eine Bindung zu einer weiteren Biuret- oder Isocyanurat-Teilstruktur dar, wobei bevorzugt Biuret- mit Biuret-Teilstrukturen und bevorzugt Isocyanurat- mit Isocyanurat-Teilstrukturen verbunden sind;
und weisen als Komponente b) bevorzugt ein Polysiloxan der Formel (I) auf

M¹ₐ₁M²ₐ₂M³ₐ₃D¹_{b1}D²_{b2}D³_{b3}T_{c}Q_{d} (I)

mit

| | | | | | |
|---|---|---|---|---|---|
| M¹ | = [R¹₃SiO_{1/2}], | M² | = [R²R¹₂SiO_{1/2}], | M³ | = [R³R¹₂SiO_{1/2}], |
| D¹ | = [R¹₂SiO_{2/2}], | D² | = [R¹R²SiO_{2/2}], | D³ | = [R¹R³SiO_{2/2}], |
| T | = [R¹SiO_{3/2}], | | | | |
| Q | = [SiO_{4/2}], | | | | |

wobei
- a1: 0 bis 20, bevorzugt 1 bis 10, insbesondere 2 bis 5;
- a2: 0 bis 10, bevorzugt 0 bis 5, insbesondere 0;
- a3: 0 bis 20, bevorzugt 1 bis 10, insbesondere 2 bis 5;
- b1: 1 bis 1000, bevorzugt 5 bis 500, insbesondere 10 bis 200;
- b2: 0 bis 10, bevorzugt 0 bis 5, insbesondere 0;
- b3: 0 bis 20, bevorzugt größer 0 bis zu 10, insbesondere 1 bis 5;
- c: 0 bis 10, bevorzugt größer 0 bis zu 5, insbesondere 1 bis 5;
- d: 0 bis 50, bevorzugt 0 bis 10, insbesondere 0 bis 2;
mit der Maßgabe, dass mindestens einer der Indices a3 und b3 größer 1, vorzugsweise größer 2 ist;
- R¹: = unabhängig voneinander gleiche oder verschiedene lineare oder verzweigte, gesättigte oder ungesättigte Kohlenwasserstoffreste mit 1 bis 30 Kohlenstoffatomen oder aromatische Kohlenwasserstoffreste mit 6 bis 30 Kohlenstoffatomen, bevorzugt Alkylreste mit 1 bis 14 Kohlenstoffatomen oder monocylische Aromaten, weiterhin bevorzugt Methyl, Ethyl, Propyl oder Phenyl, insbesondere Methyl;

- R²: = unabhängig voneinander gleiche oder verschiedene lineare oder verzweigte, gesättigte oder ungesättigte, ggf. substituierte Kohlenwasserstoffreste, wobei bevorzugte Kohlenwasserstoffe mit 2 bis 30 Kohlenstoffatome, mehr bevorzugt 2 bis 16 Kohlenstoffatome aufweisen, wobei die Substituenten ausgewählt sein können aus Methoxy, Ethoxy, Propoxy, Butoxy, Pentoxy, Glycidyloxy, bevorzugt ist R² ein Glycidyloxy substituierter Alkylenrest mit 2 bis 6 Kohlenstoffatomen insbesondere bevorzugt ist R² ein Glycidyloxypropyl-Rest;
- R³: = ist ein zweiwertiger Kohlenwasserstoff mit 2 bis 8 Kohlenstoffatomen, bevorzugt 2 bis 6, insbesondere bevorzugt 2 bis 3, dessen zweite Bindung die Bindungsstelle zu Komponente a) ist über bevorzugt eine Urethan oder Harnstoffgruppe;
und weisen als Komponente c) Kohlenwasserstoffe auf, die genau eine Bindungsstelle zu Komponente a) aufweisen, bevorzugt weisen die Kohlenwasserstoffe außer Kohlenstoff und Wasserstoff höchstens 3 Heteroatome auf, mehr bevorzugt höchstens 2 Heteroatome, besonders bevorzugt höchstens ein Heteroatom und insbesondere bevorzugt keine Heteroatome; falls Komponente c) Heteroatome aufweist, so sind diese bevorzugt ausgewählt aus der Gruppe N, O, S.

### Insbesondere bevorzugt weisen die erfindungsgemäßen Copolymere

in Komponente a) als divalenten Rest L in den Formeln (III) oder (IV) Hexamethylen, 4,4'-Diphenylmethan und Isophoron auf;
in Komponente b) ein Siloxan der Formel (I) auf mit den Indices
- a3: 2 bis 5
- a1: gleich 0 bis 1
- a2: gleich 0
- b2: und b3 gleich 0
- d: gleich 0

- R¹: Methyl oder Phenyl

in Komponente c) einen Kohlenwasserstoff auf, der frei von Heteroatomen ist und aromatische Ringe aufweist, bevorzugt einen oder mehrere Benzolringe, besonders bevorzugt weist einer der aromatischen Ringe die Bindungsstelle zu Komponente a) auf.

Die erfindungsgemäßen Copolymere können nach den Verfahren des Standes der Technik hergestellt werden bevorzugt jedoch nach dem erfindungsgemäßen Verfahren, wobei im ersten Schritt ein Zwischenprodukt die Komponenten a) und Komponenten c) aufweisend und im zweiten Schritt die Zwischenprodukte zum erfindungsgemäßen Copolymer umgesetzt werden.

Das erfindungsgemäße Verfahren zur Herstellung der erfindungsgemäßen Copolymeren kann vorzugsweise so ausgeführt werden, dass es zwei Verfahrensschritte umfasst, nämlich 1. Herstellung eines Zwischenproduktes aufweisend Komponente a) und Komponente c), und 2. Umsetzung des Zwischenproduktes (aus dem 1. Verfahrensschritt) mit Amin- und/oder Hydroxygruppen-tragenden Polymeren, vorzugsweise Polysiloxanen zu den erfindungsgemäßen Copolymeren (2. Verfahrensschritt). Dies entspricht einer bevorzugten Ausführungsform der Erfindung.

Beide Verfahrensschritte der vorgenannten bevorzugten Ausführungsform der Erfindung (Herstellung eines Zwischenproduktes aufweisend Komponente a) und Komponente c), und Umsetzung des Zwischenproduktes, mit Amin- und/oder Hydroxygruppen-tragenden Polymeren zu den erfindungsgemäßen Copolymeren, (2. Verfahrensschritt)) können in dem erfindungsgemäßen Verfahren sowohl als Eintopfreaktion, als aufeinander folgende getrennt durchgeführte Schritte oder auch dosierkontrolliert, vorzugsweise jedoch als dosierkontrolliert durchgeführt werden. Die Reaktion kann in einem Batch, Semi-batch oder kontinuierlichen Verfahren durchgeführt werden. Insbesondere bevorzugt ist die Eintopfreaktion des Verfahrensschrittes 2.

Bevorzugt werden im 1. Schritt des erfindungsgemäßen Verfahrens Biuret- und/oder Isocyanurat- haltige Polyisocyanate mit Reaktivverdünnern umgesetzt.

Bevorzugt werden im ersten Schritt Isocyanatgruppen zu Urethan- und/oder Harnstoffgruppen umgesetzt, die hierbei entstehenden Produkte entsprechen den erfindungsgemäßen Zwischenprodukten.

Mehr bevorzugt werden im ersten Schritt die Hälfte bis Dreiviertel der Isocyanatgruppen umgesetzt.

Im 2. Schritt des erfindungsgemäßen Verfahrens werden die Zwischenprodukte mit Amin- und/oder Hydroxygruppen-tragenden Polymeren, vorzugsweise Polysiloxanen zu den erfindungsgemäßen Copolymeren umgesetzt.

Bevorzugt werden die Verfahrensprodukte auf im Anschluss an den 2. Schritt auf die Abwesenheit von Isocyanatgruppen untersucht, wie in den Beispielen beschrieben. Fällt der Test negativ aus, d.h. es wären noch Isocyanatgruppen vorhanden, wird der Ansatz verworfen.

Das erfindungsgemäße Verfahren kann in Gegenwart oder in Abwesenheit eines Lösemittels erfolgen. Als geeignete, inerte organische Lösemittel werden bevorzugt wasserfreie aliphatische und alicyclische Kohlenwasserstoffe wie beispielsweise Hexan, Heptan, Cyclohexan und Ether wie beispielsweise Diethylether, Ethylenglycoldimethylether, Diethylenglycoldimethylether, Diisopropylether, Ester wie beispielsweise Ethylacetat, n-Propylacetat, i-Propylacetat, n-Butylacetat, i-Butylacetat, Amylacetat, Ketone wie beispielsweise Aceton, Methylethylketon, Methylisobutylketon und Mischungen daraus eingesetzt.

Die Reaktanden können dabei in jeder beliebigen Konzentration in einem Lösemittel vorliegen, zum Beispiel 5 bis 99 Gew.-%, bevorzugt 20 bis 90 Gew.-%, insbesondere bevorzugt 40 bis 90 Gew.-%.

Das erfindungsgemäße Verfahren kann im Sinne einer bevorzugten Ausführungsform bei einer Temperatur von 10 bis 150 °C, vorzugsweise von 25 bis 100 °C, bevorzugt von 40 bis 90 °C durchgeführt werden.

Das erfindungsgemäße Verfahren kann im Sinne einer bevorzugten Ausführungsform vorzugsweise bei einem Druck von 0,5 bis 20 bar, bevorzugt 1 bis 5 bar, insbesondere bevorzugt bei Normaldruck durchgeführt werden.

Die erfindungsgemäße Umsetzung kann sowohl bei Tageslicht als auch unter Lichtausschluss, vorzugsweise bei Tageslicht durchgeführt werden.

Die erfindungsgemäße Umsetzung kann sowohl unter inerten Bedingungen (Stickstoff, Argon) als auch unter Sauerstoff- und/oder Luftatmosphäre, vorzugsweise unter Stickstoffatmosphäre durchgeführt werden.

Die im 1. Schritt des Verfahrens eingesetzten Biuret- und/oder Isocyanurat- haltigen Polyisocyanate sind bevorzugt die Trimere, Tetramere, Pentamere, Hexamere und Heptamere aus bifunktionellen Isocyanaten, wobei die Isocyanate aromatisch oder aliphatisch sind, bevorzugt aliphatisch. Die bifunktionellen Isocyanate können ausgewählt sein aus der Gruppe umfassend 2,4-/2,6-Toluoldiisocyanat (TDI), Diphenylmethan-4,4'-diisocyanat (MDI), Naphthyl-1,5-diisocyanat (NDI), Dicyclohexylmethan-4,4'-diisocyanat, 3-Isocyanatomethyl-3,3,5-trimethylcyclohexylisocyanat (Isophorondiisocyanat = IPDI), Butan-1,4-diisocyanat, Hexan-1,6-diisocyanat (HDI), 2-Methylpentan-1,5-diisocyanat, 2,2,4-Trimethylhexan-1,6-diisocyanat (TMDI), Dodecan-1,12-diisocyanat, Cyclohexan-1,4-diisocyanat, 3,3'-Dimethyl-dicyclohexylmethan-4,4'-diisocyanat, Dicyclohexylpropan-(2,2)-4,4'-diisocyanat, 3-Isocyanatomethyl-1-methyl-1-isocyanatocyclohexan (MCI), 2-Methylcyclohexan-1,3-diisocyanat, bevorzugt 3-Isocyanatomethyl-3,3,5-trimethylcyclohexylisocyanat (Isophorondiisocyanat = IPDI), Hexan-1,6-diisocyanat (HDI), besonders bevorzugt Hexan-1,6-diisocyanat (HDI).

Einige dieser Isocyanate weisen Stereozentren auf. Insbesondere wird auf die Isomere des Isophorons hingewiesen. Ausdrücklich sind alle denkbaren Isomere im Umfang dieser Erfindung eingeschlossen. So kann beispielsweise Isophorondiisocyanat in ein cis- und ein trans-Isomer unterschieden werden. Besonders bevorzugt ist Isophorondiisocyanat aus einem cis/trans Gemisch von 5:1 bis 1:5, bevorzugt 3:1 bis 1:3, weiter bevorzugt 1:1. Ein besonders bevorzugtes, kommerzielles Produkt besteht aus einem cis/trans Gemisch von 3:1. Der Einsatz von kommerziellem Isophorondiisocyanat ist bevorzugt. Isophorondiisocyanat ist unter anderen Bezeichnungen erhältlich, welche als Synonyma im Umfang dieser Erfindung eingeschlossen sind: 3-Isocyanatmethyl-3,5,5-trimethylcyclohexylisocyanat, 5-Isocyanato-1-(isocyanatomethyl)-1,3,3-trimethylcyclohexane, CA RN: 4098-71-9. Es sind diverse Handelsnamen üblich, häufig enthalten sie den Namen des Stammmoleküls Isophoron, es sind jedoch auch andere Handelsnamen geläufig: z.B. Desmodur^{®}| (BAYER), Isocur IPDI 22-200 (ISO-ELEKTRA), VESTANAT^{®} IPDI (EVONIK INDUSTRIES), welche ebenfalls im Umfang der vorliegenden Erfindung eingeschlossen sind. Übliche Spezifikationen für Isophorondiisocyanat sind: Gesamtchlorgehalt <400 mg/kg, hydrolysierbares Chlor <200 mg/kg, Reinheit >99,5 Gew.-%, Brechungsindex n25D 1,483 (DIN 51 423, Teil 2), NCO-Gehalt 37,5 - 37,8 Gew.-% (EN ISO 11 909 / ASTM D 2572), das kommerzielle Produkt wird als farblos bis leicht gelb beschrieben.

Die im 1. Schritt des Verfahrens vorzugsweise eingesetzten Biuret- und/oder Isocyanurat- haltigen Polyisocyanate können einzeln oder auch als Mischungen eingesetzt werden. Es kann sich um gleiche oder unterschiedliche Polyisocyanate handeln. Werden beispielsweise unterschiedliche Polyisocyanate eingesetzt, so kann Komponente b) mit zwei unterschiedlichen Komponenten a) verknüpft sein. Wird beispielsweise nur ein Polyisocyanat eingesetzt, so ist Komponente b) mit zwei gleichen Komponenten a) verknüpft. Vorzugsweise ist Komponente b) mit zwei gleichen Komponenten a) verknüpft.

Reaktivverdünner im Sinne der Erfindung sind bevorzugt primäre und/oder sekundäre Mono-Amine, Mono-Alkohole und/oder Mono-Thiole, deren Kohlenwasserstoffe jeweils 6 bis 30 Kohlenstoffe aufweisen, die bevorzugt außer Kohlenstoff und Wasserstoff höchstens 3 Heteroatome aufweisen, mehr bevorzugt höchstens 2 Heteroatome, besonders bevorzugt höchstens ein Heteroatom und insbesondere bevorzugt keine Heteroatome aufweisen. Falls der Kohlenwasserstoff Heteroatome aufweist, so sind diese bevorzugt ausgewählt aus der Gruppe N, O, S. Die Begriffe Mono-Amine, Mono-Alkohole und Mono-Thiole sind dem Fachmann bekannt als Verbindungen, die ausschließlich nur eine der aufgeführten funktionellen Gruppen aufweisen, damit ist ausdrücklich definiert, dass diese Verbindungen lediglich eine der aufgeführten funktionellen Gruppen aufweisen.

Bevorzugt weist der Kohlenwasserstoff 6 bis 30 Kohlenstoffatome auf, bevorzugt 12 bis 26, mehr bevorzugt, 14 bis 20.

Mehr bevorzugt weist der Kohlenwasserstoff eine ununterbrochene Kette von mindestens 6 Kohlenstoffatomen auf, bevorzugt von 6 bis 21 Kohlenstoffatomen, bevorzugt.

Ebenfalls mehr bevorzugt weist der Kohlenwasserstoff eine oder mehrere Doppelbindungen und/oder Dreifachfachbindungen auf, welche isoliert, konjugiert oder kumuliert sein können.

Besonders bevorzugt weist der Kohlenwasserstoff aromatische Ringe auf, bevorzugt einen oder mehrere Benzolringe, besonders bevorzugt weist einer der aromatischen Ringe die Bindungsstelle zu Komponente a) auf.

Zur Umsetzung der Biuret- und/oder Isocyanurat-haltigen Polyisocyanate mit Reaktivverdünnern zur Bildung der Zwischenprodukte aufweisend die Komponente a) und Komponente c), wie auch den Zwisc henprodukten mit Amin- und/oder Hydroxygruppen-tragenden Polymeren zu den erfindungsgemäßen Copolymeren ist es bevorzugt, die Reaktion durch Katalyse zu beschleunigen. Als Katalysatoren sind die dem Fachmann aus der Urethan-Chemie hinlänglich bekannten Zinn-, Wismut- und Titan-Katalysatoren, wie Dibutylzinnlaurat, Dioctylzinndiketonat, Dibutylzinndilaurat, Dioctylzinndilaurat, beispielsweise erhältlich unter dem Handelsnamen TIB KAT^{®} 216 (Goldschmidt TIB / TIB Chemicals) Dibutylzinndiacetylacetonat, Dibutylzinndiacetat, Dibutylzinndioctoat, oder Dioctylzinndiacetylacetonat, Borchi^{®}-Katalysatoren, Wismutoxide, Wismutcarboxylat beispielsweise erhältlich unter dem Handelsnamen TIB KAT^{®} 722 (Goldschmidt TIB / TIB Chemicals), Wismutmethansulfonat, Wismutnitrat, Wismutchlorid, Triphenyl-Wismut, Wismutsulfid, sowie Zubereitungen mit diesen Katalysatoren, Titanate, z.B. Titan(IV)isopropylat, Eisen(III)-Verbindungen, z.B. Eisen(III)-acetylacetonat, Aluminiumverbindungen, wie Aluminiumtriisopropylat, Aluminiumtri-sec-butylat und andere Alkoholate sowie Aluminiumacetylacetonat verwandt werden.

Des Weiteren eignen sich auch Zinksalze, wie Zinkoctoat, Zinkacetylacetonat und Zink-2-ethylcaproat, oder Tetraalkylammoniumverbindungen, wie N,N,N-Trimethyl-N-2-hydroxypropylammoniumhydroxid, N,N,N-Trimethyl-N-2-hydroxypropylammonium-2-ethylhexanoat oder Cholin-2-ethylhexanoat. Bevorzugt ist die Verwendung von Zinkoctoat (Zink-2-ethylhexanoat), Dioctylzinndilaurat, Wismutoxiden, Wismutcarboxylat, Wismutkatalysator-Zubereitungen und/oder der Tetraalkylammoniumverbindungen, besonders bevorzugt diejenige von Zinkoctoat, Dioctylzinndilaurat und/oder Wismutcarboxylat, sowie Zubereitungen mit Wismut-Katalysatoren.

Der Katalysator wird bevorzugt in Konzentrationen von 5 bis 5000 ppm eingesetzt. Die Einsatzmenge des Katalysators kann die Zusammensetzung des Endproduktes erheblich beeinflussen. Daher kann es sinnvoll sein für verschiedene Katalysatoren unterschiedliche Einsatzkonzentrationen zu wählen. Zum Beispiel können Organozinn-Katalysatoren bevorzugt in Konzentrationen von 5 bis 150 ppm und Wismut-Carboxylate bevorzugt in Konzentrationen von 300 bis 2000 ppm eingesetzt werden. Die Konzentrationsgaben beziehen sich auf die jeweilige Summe der anwesenden Reaktionspartner und Vernachlässigung weitere nicht reaktiver Inhaltsstoffe, wie z.B. Lösemittel.

Als ein weiterer Teilschritt zur Herstellung des erfindungsgemäßen Polymeren kann eine anschließende Destillation bzw. Aufreinigung der Umsetzungsprodukte vorteilhaft sein. Die Destillation bzw. Aufreinigung kann z. B. mit Hilfe eines Rotationsverdampfers, vorzugsweise bei einer Temperatur von 20 bis 250 °C, bevorzugt 40 bis 180 °C und besonders bevorzugt 50 bis 150 °C erfolgen. Der Druck beträgt dabei vorzugsweise von 0,0001 bis 0,75 bar, bevorzugt von größer 0,001 bis 0,2 bar und besonders bevorzugt von 0,01 bis 0,1 bar. Die Destillation bzw. Aufarbeitung kann insbesondere zur Abtrennung von Lösemitteln vorteilhaft sein.

Die Produkte des erfindungsgemäßen Verfahrens können Strukturen aufweisen, denen die Komponente b) fehlt. Bevorzugt weisen die verfahrensgemäßen Produkte diese nur Komponente a) und Komponente c) aufweisenden Produkte zu nicht mehr als 15 Gew.%, bevorzugt zu 0,01 Gew.- bis 10 Gew.- Prozent auf.

Erfindungsgemäße Zusammensetzungen enthalten neben den erfindungsgemäßen Copolymeren oder den erfindungsgemäßen Verfahrensprodukten weiterhin Additive, die ausgewählt sein können aus der Liste enthaltend Booster, Emulgatoren, Lösemittel, Parfüm, Parfümträger, Farbstoffe, Viskositätsregulatoren, Entschäumer, Konservierungsmittel, antimikrobiellen Wirkstoffe, Germizide, Fungizide, Antioxidantien, organische Lösemittel, nicht siloxanhaltige Polymere und andere nicht erfindungsgemäße siloxanhaltige Polymere wie z.B. Silikonöle, Tenside, Gerüststoffe, Bleichmittel, Bleichaktivatoren, Enzyme, Fluoreszenzmittel, Schauminhibitoren, Antiredepositionsmittel, optische Aufheller, Vergrauungsinhibitoren, Einlaufverhinderer, Knitterschutzmittel, Farbübertragungsinhibitoren, Korrosionsinhibitoren, Antistatika, Bittermittel, Bügelhilfsmittel, Phobier- und Imprägniermittel, Quell- und Schiebefestmittel, neutrale Füllsalze sowie UV-Absorber. Hierbei können Substanzen einer Klasse auch in einer anderen Klasse Wirksamkeit entfalten.

Erfindungsgemäße wässrige Emulsion enthalten neben den erfindungsgemäßen Copolymeren oder den erfindungsgemäßen Verfahrensprodukten weiterhin Additive, die ausgewählt sein können aus der Liste im vorherigen Absatz.

Bevorzugte erfindungsgemäße Zusammensetzungen oder erfindungsgemäße wässrige Emulsionen sind insbesondere Konzentrate, Compounds /Emulsionskonzentrate und/oder deren wässerige Formulierungen, wässrige Emulsionen und/oder Lösungen, eine Formulierung oder Emulsion in organischen Verbindungen wie Polyethern, Polyolen, Alkoholen.

Insbesondere können die erfindungsgemäßen Zusammensetzungen zwischen 0,001 und 25 Gew.-%, besonders bevorzugt 0,01 bis 15 Gew.-% bezogen auf die Gesamtmasse des Weichspülers eines oder mehrerer unterschiedlicher Additive oder Hilfsstoffe enthalten.

Weiterhin besonders bevorzugte erfindungsgemäße Zusammensetzungen sind Konzentrate, welche die erfindungsgemäßen Copolymere bzw. die erfindungsgemäßen Verfahrensprodukte in Konzentrationen von etwa 90 bis 99,99 Gew.-% bezogen auf die gesamte Konzentratmasse enthalten, die nur mit geringen Anteilen an Lösemitteln versetzt sind. Bevorzugt sind die Konzentrate keine wässrigen Lösungen.

Weitere besonders bevorzugte erfindungsgemäße Zusammensetzungen sind Compounds- oder Emulsionskonzentrate, die die erfindungsgemäßen Copolymere bzw. die erfindungsgemäßen Verfahrensprodukte in Konzentrationen von 40 bis 90 Gew.-%, bevorzugt 50 bis 80 Gew.-% bezogen auf die Gesamtmasse enthalten. Weitere Bestandteile dieser Zusammensetzungen sind Wasser und/oder Lösemittel, ausgewählt aus der Gruppe der Glykole, unverzweigten und/oder verzweigten Alkohole und/oder Alkylether mit 1 bis 6 Kohlenstoffatomen und gegebenenfalls einen oder mehreren nichtionischen Emulgatoren, beispielsweise ein Alkoholethoxylat mit 3-25 Ethylenoxideinheiten. Compounds- und Emulsionskonzentrate sind in der Regel in Wasser löslich bzw. selbstemulgierbar.

Besonders bevorzugte erfindungsgemäße wässrige Emulsionen sind Weichspüler zur Behandlung von textilen Flächengebilden.

Insbesondere bevorzugte erfindungsgemäße Zusammensetzungen sind Weichspüler zur temporären oder permanenten Ausrüstung von Textilien.

Flächengebilde im Umfang dieser Erfindung sind massiv oder aus Fasern, wie Holz, Baumwolle, Polyester, Polyamid, künstliche Synthesefasern, Papier und Pappe, Viskose, Cellulose und/oder Lignin-basierte Fasern.

Bevorzugt sind die Flächengebilde ausgewählt aus der Gruppe umfassend Gewebe, textile Gewebe, Gewirke, Gestricke, Non-wovens, Tissue (Papierfaser) und/oder Fasern aus natürlichen und/oder synthetischen Rohstoffen, Leder, Haare, Fell und Holz.

Die erfindungsgemäßen Zusammensetzungen können gegebenenfalls weitere Textilweichmacher enthalten. Dies sind eine oder mehrere kationische Textil-weichmachende Verbindungen, die eine oder mehrere langkettige Alkylgruppen in einem Molekül aufweisen. Weit verbreitete kationische Textil-weichmachende Verbindungen umfassen beispielsweise Methyl-N-(2-hydroxyethyl)-N,N-di(talgacyloxyethyl)ammonium-Verbindungen oder N,N-Dimethyl-N,N-di(talgacyloxyethyl)ammonium-Verbindungen.

Durch Verdünnen mit Wasser können aus den erfindungsgemäßen Konzentraten, Emulsionskonzentraten und Formulierungen z.B. die erfindungsgemäßen Weichspüler hergestellt werden.

Die erfindungsgemäßen wässrigen Emulsionen als Weichmacher für textile Flächengebilde enthalten die erfindungsgemäßen Copolymere oder die erfindungsgemäßen Verfahrensprodukte anteilsmäßig zu 0,1 bis 10 Gew.-%, bevorzugt zu 0,3 bis 5 Gew.-%, im Besonderen zu 0,5 bis 3 Gew.-% bezogen auf die gesamte Formulierung.

Als Emulgatoren werden typischerweise Fettalkoholethoxylate mit Ethoxylierungsgraden zwischen 3 und 12 eingesetzt, und zwar in einem Verhältnis vom Copolymer zum Fettalkoholethoxylat von 5 zu 1 bis 1 zu 1. Ebenso finden hoch siedende Glykole wie Dipropylenglykol oder Butyldiglykol Anwendung.

Bevorzugt sind Emulgatoren in den erfindungsgemäßen Zusammensetzungen und den erfindungsgemäßen wässrigen Emulsionen zu 0,1 bis 5 Gew.-%, mehr bevorzugt zu 0,5 bis 2 Gew.-% enthalten.

Als Parfüm können alle für wässrige Weichspüler aus dem Stand der Technik als geeignet bekannte Duftstoffe oder Duftstoffmischungen eingesetzt werden, vorzugsweise in Form eines Parfümöles. Beispiele für Duft- bzw. Riechstoffe werden unter anderem in der DE 197 51 151 A1, Seite 4, Zeile 11 - 17 offenbart. Insbesondere können die erfindungsgemäßen Zusammensetzungen zwischen 0,01 und 10, besonders bevorzugt 0,1 bis 5 Gew.-% eines oder mehrerer Duftstoffe oder Duftstoffmischungen enthalten.

Als Farbstoffe können alle für wässrige Weichspüler aus dem Stand der Technik als geeignet bekannte Farbstoffe eingesetzt werden, wobei wasserlösliche Farbstoffe bevorzugt sind. Beispiele für geeignete wasserlösliche handelsübliche Farbstoffe sind SANDOLAN^{®} Walkblau NBL 150 (Hersteller Clariant) und Sicovit^{®} Azorubin 85 E122 (Hersteller BASF). Insbesondere können die erfindungsgemäßen Zusammensetzungen zwischen 0,001 und 0,1 Gew.-% besonders bevorzugt 0,002 bis 0,05 Gew.-% eines oder mehrerer Farbstoffe oder Farbstoffmischungen enthalten.

Als Viskositätsregulator zur Verringerung der Viskosität kann der wässrige Weichspüler ein Alkalimetall- oder Erdalkalimetallsalz, vorzugsweise Calciumchlorid, in einer Menge von 0,05 bis 2 Gew.-% enthalten.

Als Viskositätsregler zur Erhöhung der Viskosität kann der wässrige Weichspüler einem aus dem Stand der Technik geeignet bekannten Verdicker enthalten, wobei die aus WO 2007/125005 bekannten Polyurethanverdicker bevorzugt sind. Beispiele für geeignete Verdicker sind TEGO^{®} Visco Plus 3030 (Hersteller Evonik Tego Chemie), Acusol^{®} 880 und 882 (Hersteller Rohm & Haas), Rheovis^{®} CDE (Hersteller BASF), Rohagit^{®} KF 720 F (Hersteller Evonik Röhm GmbH) und Polygel^{®} K100 von Neochem GmbH.

Als Entschäumer können alle für wässrige Weichspüler aus dem Stand der Technik als geeignet bekannten Entschäumer eingesetzt werden. Beispiele für geeignete handelsübliche Entschäumer sind Dow Corning^{®} DB-110A und TEGO^{®} Antifoam^{®} 7001 XP. Bevorzugt enthalten die erfindungsgemäßen Zusammensetzungen zwischen 0,0001 und 0,05, besonders bevorzugt 0,001 bis 0,01 Gew.-% eines oder mehrerer unterschiedlicher Entschäumer.

Als Konservierungsmittel kann der wässrige Weichspüler aus dem Stand der Technik als geeignet bekannte bakterizide und/oder fungizide Wirkstoffe enthalten, wobei wasserlösliche Wirkstoffe bevorzugt sind. Beispiele für geeignete handelsübliche Bakerizide sind Methylparaben, 2-Brom-2-nitro-1,3-propandiol, 2-Methyl-4-isothiazolin-3-on und 5-Chlor-2-methyl4-isothiazolin-3-on. Ebenso kann der wässrige Weichspüler als Konservierungsmittel einen Oxidationsinhibitor enthalten. Beispiele für geeignete handelsübliche Oxidationsinhibitoren sind Ascorbinsäure, 2,6-Di-tert-butyl-4-methlyphenol (BHT), Butylhydroxyanisol (BHA), Tocopherol und Propylgallat. Bevorzugt enthalten die erfindungsgemäßen Zusammensetzungen zwischen 0,0001 und 0,5, besonders bevorzugt 0,001 bis 0,2 Gew.-% eines oder mehrerer unterschiedlicher Konservierungsmittel. Insbesondere können die erfindungsgemäßen Zusammensetzungen zwischen 0,001 und 0,1, besonders bevorzugt 0,001 bis 0,01 Gew.-% eines oder mehrerer unterschiedlicher Oxidationsinhibitoren enthalten.

Als organische Lösemittel kann der Weichspüler kurzkettige Alkohole, Glykole und Glykolmonoether enthalten, wobei Ethanol, 2-Propanol, 1,2-Propandiol und Dipropylenglycol bevorzugt wird. Insbesondere können die erfindungsgemäßen Zusammensetzungen zwischen 0,1 und 10, besonders bevorzugt 0,2 bis 5 Gew.-% eines oder mehrerer unterschiedlicher organischer Lösemittel enthalten.

Der Weichspüler kann eines oder mehrere nicht siloxanhaltige Polymere enthalten. Beispiele dafür sind Carboxymethylcellulose, Polyethylenglycol, Poylvinylalkohol, Poly(meth)acrylate), Polyethylenimine oder Polysaccharide. Insbesondere können die erfindungsgemäßen Zusammensetzungen zwischen 0,01 und 25 Gew.-%, besonders bevorzugt 0,1 bis 10 Gew.-% eines oder mehrerer unterschiedlicher nicht-siloxanhaltiger Polymere enthalten.

Booster im Sinne der Erfindung sind Verbindungen, die auf den behandelten Flächengebilden eine zusätzliche Verbesserung der Wasserabweisung bewirken. Die Booster sind in der Lage sowohl mit den freien Hydroxy oder Amino-Funktionen der erfindungsgemäßen Copolymere als auch mit den textilen Flächengebilden vernetzend zu reagieren. Bevorzugte Booster weisen Carbodiimid-Funktionen auf, besonders bevorzugt sind Polycarbodiimide.

Bevorzugte erfindungsgemäße Zusammensetzungen und erfindungsgemäße wässrige Emulsionen enthalten mindestens ein Polycarbodiimid als Booster.

Insbesondere bevorzugt enthalten die erfindungsgemäßen Zusammensetzungen und erfindungsgemäßen wässrigen Emulsionen die erfindungsgemäßen Copolymere oder die erfindungsgemäßen Verfahrensprodukte, als Booster ein Polycarbodiimid, mindestens einen Emulgator, Konservierungsmittel, optional mindestens ein Lösemittel ausgewählt aus Ethylacetet, Butylacetat, Propylenglycol und TPM.

Ein weiterer Gegenstand der Erfindung ist die Verwendung der erfindungsgemäßen Copolymere und der erfindungsgemäßen Verfahrensprodukte zur Ausrüstung von Flächengebilden.

Bevorzugt ist die verwendungsgemäße Ausrüstung von textilen Flächengebilden, mehr bevorzugt in Textil-pflegenden Zusammensetzungen, insbesondere in Textilweichmachenden Zusammensetzungen (Weichspüler).

Ebenfalls bevorzugt ist die Verwendung der erfindungsgemäßen Copolymere bzw. der erfindungsgemäßen Verfahrensprodukte als Beschichtungsmittel für Holz Bevorzugt werden die erfindungsgemäßen Copolymere und die erfindungsgemäßen Verfahrensprodukte als Weichmacher für Flächengebilde verwendet.

Bevorzugte Flächengebilde sind ausgewählt aus der Gruppe umfassend textile Flächengewebe, Holz, Leder, Haare und Fell, bevorzugt sind textile Flächengewebe Gewirke, Gestricke, Non-wovens, Tissue (Papierfaser) und/oder Fasern aus natürlichen und/oder synthetischen Rohstoffen.

Ein weiterer Gegenstand der vorliegenden Erfindung ist ein Verfahren zur Flüssigkeits- und Schmutz-abweisenden Imprägnierung von textilen Flächengebilden durch Verwendung der erfindungsgemäßen Copolymere.

Im Umfang der vorliegenden Erfindung wird unter Phobierung verstanden, dass textile Flächengebilde gegenüber Flüssigkeiten und Schmutz, bevorzugt Wasser und wässrige Lösungen und/oder Öle und Fette ausgerüstet sind. Insbesondere Flüssigkeiten werden durch die Ausrüstung zumindest teilweise abgewiesen.

Die Abweisung wird bevorzugt durch Ermittlung des jeweiligen Randwinkels (DIN EN ISO 14419) und/oder Bestimmung nach Spraytest gemäß AATCC M22-2014 ermittelt, wie in den Beispielen gezeigt. Eine Verbesserung im Randwinkel zeigt sich durch die Vergrößerung des Randwinkels oder durch ein langsameres Einsinken des Tropfens in den Stoff, also Vergrößerung des Randwinkels nach einer Einwirkzeit, bevorzugt 60 Sekunden nach dem Auftragen des Tropfens. Im Spraytest bedeutet eine Erhöhung des Wertes eine Verbesserung. Die Bewertungen erfolgen im Vergleich zu einer analogen Behandlung ohne Wirkstoff.

Ein bevorzugtes Verfahren zur Flüssigkeits- und Schmutz-abweisenden Imprägnierung von textilen Flächengebilden ist Verwendung der erfindungsgemäßen Zusammensetzungen, bevorzugt der wässrigen Emulsionen, mehr bevorzugt der wässrigen Emulsionen unter Verwendung von Boostern, insbesondere bevorzugt der wässrigen Emulsionen unter Verwendung eines Polycarbodiimds als Booster.

Ein weiterer Gegenstand sind phobierte textile Flächengebilde aufweisend die erfindungsgemäßen Copolymere, bevorzugt in Kombination mit einem Booster, besonders bevorzugt mit einem Polycarbodiimd als Booster, unter Erhalt oder Verbesserung der haptischen Eigenschaften.

Die haptischen Eigenschaften sind auf den Weichgriff bezogen, bevorzugt wird der Weichgriff mit Hilfe eines TSA wie in den Beispielen beschrieben bestimmt. Insbesondere bevorzugt wird der Weichgriff mit einem zugeschnittenen Stück Textilgewebe nach vorheriger Konditionierung (4 Stunden) bei 25 °C und 50 % rel. Luftfeuchtigkeit in den TSA (Tissue Soft Analyzer, Fa Emtec Electronic GmbH) eingelegt und festgespannt. Das Messgerät ermittelt dann Einzelwerte für Weichheit, Glattheit und Steifigkeit des Textilgewebes und ermittelt daraus den Gesamteindruck, das Handgefühl (HF/Hand-Feel). Dieser HF-Wert wurde mittels einem Algorithmus, der Fa. EMTEC das speziell auf Textilien ausgelegt ist, ermittelt. Ein steigender HF Wert bedeutet eine höhere Weichheit. Die Bewertungen erfolgen im Vergleich zu einer analogen Behandlung ohne Wirkstoff.

Ausführungsbeispiele:

### Allgemeine Methoden und Materialien

Bestimmung des Isocyanat-Gehaltes (Massenanteil an Isocyanatgruppen) nach EN ISO 11909:2007:
Die Einwaage richtet sich nach dem Isocyanat-Gehalt. Ist der ungefähre Gehalt an Isocyanat nicht bekannt, so muss er in einem Vorversuch mit einer Einwaage von 3,5 g Polymer ermittelt werden. Die Probe auf 1 mg genau in einen 500-ml-Erlenmeyerkolben einwiegen und in 25 ml Toluen, nötigenfalls unter leichtem Erwärmen, lösen. Nach dem Abkühlen auf Raumtemperatur 20 ml der entsprechenden Dibutylamin-Lösung mit einer Pipette zugeben. Den Kolben verschließen und 15 min stehen lassen, gelegentlich umschütteln. Mit 150 ml Ethanol verdünnen und, nach Zugabe von einigen Tropfen Bromphenolblau-Lösung, mit der entsprechenden Salzsäure bis zum Umschlag nach Gelb titrieren. Falls während der Titration Entmischen auftritt, zusätzliches Ethanol zugeben.

### GPC:

GPC-Messungen zur Bestimmung der Polydispersität und gewichtsmittleren Molmassen Mw wurden unter den folgenden Messbedingungen durchgeführt: Säulenkombination SDV 1000/10000 Å (Länge 55 cm), Temperatur 35 °C, THF als mobile Phase, Fließrate 0,35 ml/min, Probenkonzentration 10 g/l, RI-Detektor, Auswertung der erfindungsgemäßem Polymere erfolgte gegen Polystyrol-Standard (162-2520000 g/mol).

### Materialien:

Unidyne TG-580: ein Fluoralkyl Acrylat als wässrige Emulsion, Gehalt 30 Gew-%;
Vestanat^{®} HT 2500 LV: (Warenzeichen der Evonik, Deutschland) ein aliphatisches Polyisocyanat auf Basis von Hexamethylendiisocyanat mit einem NCO Wert von 22,8%; es enthält Isocyanuratstrukturen und besitzt eine NCO-Funktionalität zwischen 3 und 4;
Vestanat^{®} T 1890/100: ein aliphatisches Polyisocyanat auf Basis von Isophorondiisocyanat mit einem NCO Wert von 17,2 %; es enthält Isocyanuratstrukturen und besitzt eine NCO-Funktionalität zwischen 3 und 4;
Vestanat^{®} HB 2640 LV: ein aliphatisches Polyisocyanat auf Basis von Hexamethylendiisocyanat mit einem NCO Wert von 22,8%; es enthält Biuret und besitzt eine NCO-Funktionalität zwischen 3 und 4;
Novares^{®} LS 500: (Warenzeichen der RÜTGERS Novares, Deutschland) ein Reaktionsprodukt aus Styrol mit Phenol, welches im Mittel 1,5 Styroleinheiten pro Phenol aufweist, das Produkt hat eine OHZ von 242,7;
TIB Kat 716 (Fa. TIB Chemicals AG);
Isostearylalkohol mit einer OHZ von 203,5 der Fa. Falc; Stearylalkohol (97 Gew.-%), Fa. ABCR; Myristylalkohol (>96 %), Kao Chemicals; Cetylalkohol (>98 %), Evonik; Laurylalkohol (98 Gew.-%), Fa. Aldrich;
Polyvest^{®} EP HT: (Warenzeichen der Evonik) ein hydroxyterminiertes Polybutadien mit einer OHZ von 47 mg KOH/g; α,ω-Dihydroxypolydimethylsiloxan, OHZ 51, 30 Siloxaneinheiten; α,ω-Dihydroxypolydimethylsiloxan, OHZ 14, 80 Siloxaneinheiten; tristerminales Trihydroxypolydimethylsiloxan, OHZ 35, Formel (I) M₃D₅₇T₁Q₀; terminales Aminopolydimethylsiloxan mit einem Stickstoffgehalt von 3,1 Gew.-%, 10 Siloxaneinheiten;
PM 3705 ist ein Polycarbodiimid von 3M, 25 Gew.-% in Propylenglycol/Wasser (8%/67%);
Synperonic PE/F 108: ein ethoxyliertes Polypropylenoxid mit einem Molgewicht von ca. 14.000 g/mol;
Acticide MBS, ein wässriges 5 Gew.-% Konservierungsmittel, Mischung zweier Isothiazolinon-Biozide, Firma Thor;
n-Butylacetat (98 Gew.-%) der Fa. Brenntag; Ethylacetat (99,5 %) der Fa. Sigma-Aldrich; Dowanol TPM: ein Tripropylenglykolmonomethylether, Fa. DOW;
Flächengebilde:
   Textilien: Baumwolle, Webware: Flächengewicht 205 g/m², Dicke: 400 µm; Polyester: Flächengewicht 170 g/m², Dicke: 200 µm; Polyamid: Flächengewicht 65 g/m², Dicke: 50 µm, alle Proben von WFK-Testgewebe GmbH (Christenfeld 10 41379 Brüggen);
Holz: Buche Natur, Testplatten 5,0 x 5,0 cm, Fa. Rocholl GmbH.

### Beispiel 1, Synthesebeispiele, a) Isocyanurate:

### Beispiel 1a.1:

In einem beheizbaren Glaskolben mit mechanischem Rührer, Thermometer und Gaseinleitung wurden 552,63 g Vestanat HT 2500 LV vorgelegt und auf 50°C erhitzt. 463 g Novares LS 500 und 423,41 g n-Butylacetat und 1000 ppm TIB Kat 716 innerhalb von 90 min. zugetropft (Diese Menge Katalysator bezieht sich in allen Beispielen auf die Summe der Isocyanatverbindungen und der jeweiligen Komponente c)). Die Reaktionstemperatur wurde 3 Stunden bei 50°C gehalten. Im Anschluss wurde mittels einer entnommenen Probe der NCO Wert bestimmt.

Erwartungsgemäß sind 2/3 der NCO Gruppen umgesetzt. Die Temperatur wurde auf 70°C erhöht, es wurden 1111 g eines Hydroxysiloxans mit der OHZ 51 mg KOH/g und 100 ppm TIB Kat LA 716 innerhalb von 5 min zugegeben und die Temperatur wurde auf 80°C erhöht und weitere 2 Stunden gerührt. Nach Abkühlung auf Raumtemperatur wurde der vollständige Umsatz der verbliebenen NCO Gruppen mittels einer finalen Probe kontrolliert.

GPC: Mw: 38832 g/mol; Mn: 20373 g/mol; Mw/Mn: 1,91.

### Beispiel 1a.2:

Im analogen Versuchsaufbau und gleicher Versuchsführung wie unter 1a.1 wurden 22,1 g Vestanat HT 2500 LV mit 18,5 g Novares LS 500 in 40,3 g n-Butylacetat mit 1000 ppm TIB Kat 716 umgesetzt. 2/3 der NCO Gruppen waren umgesetzt. Die Temperatur wurde auf 70°C erhöht, es wurden 161,9 g eines Hydroxysiloxans mit der OHZ 14 mg KOH/g und 100 ppm TIB Kat LA 716 innerhalb von 3 min zugegeben und die Temperatur wurde auf 80°C erhöht und weitere 2 Stunden gerührt. Umsatzkontrolle wie bei 1a.1.

GPC: Mw: 30.919 g/mol; Mn: 5308 g/mol; Mw/Mn: 5,82.

### Beispiel 1a.3:

Im analogen Versuchsaufbau und gleicher Versuchsführung wie unter 1a.1 wurden 66,3 g Vestanat HT 2500 LV mit 66,1 g Isostearylalkohol in 53 g n-Butylacetat mit 1000 ppm TIB Kat 716 umgesetzt. 2/3 der NCO Gruppen waren umgesetzt. Die Temperatur wurde auf 70°C erhöht, es wurden 133,32 g eines Hydroxysiloxans mit der OHZ 51 mg KOH/g und 100 ppm TIB Kat LA 716 innerhalb von 3 min zugegeben und die Temperatur wurde auf 80°C erhöht und weitere 2 Stunden gerührt. Umsatzkontrolle wie bei 1a.1.

GPC: Mw: 27081 g/mol; Mn: 9237 g/mol; Mw/Mn: 2,93.

### Beispiel 1a.4:

Im analogen Versuchsaufbau und gleicher Versuchsführung wie unter 1a.1wurden 77,36 g Vestanat HT 2500 LV mit. 64,9 g Novares LS 500 in 47,74 g n-Butylacetat mit 1000 ppm TIB Kat 716 umgesetzt. 2/3 der NCO Gruppen waren umgesetzt. Die Temperatur wurde auf 70°C erhöht, es wurden 168,7 g eines Polyvest^{®} EP HT mit der OHZ 47 mg KOH/g und 30 g n-Butylacetat und 100 ppm TIB Kat LA 716 innerhalb von 3 min zugegeben und die Temperatur wurde auf 80°C erhöht und weitere 2 Stunden gerührt. Umsatzkontrolle wie bei 1a.1.

GPC: Mw: 84560 g/mol; Mn: 3830 g/mol; Mw/Mn: 22,08.

### Beispiel 1a.5:

Im analogen Versuchsaufbau und gleicher Versuchsführung wie unter 1a.1wurden 33,2 g Vestanat HT 2500 LV mit 16,7 g Novares LS 500 und 13,0 g Stearylalkohol in 203,76 g Ethylacetat mit 1000 ppm TIB Kat 716 umgesetzt. 2/3 der NCO Gruppen waren umgesetzt. Die Temperatur wurde auf 70°C erhöht, es wurden 242,8 g eines Hydroxysiloxans mit der OHZ 14 mg KOH/g und 100 ppm TIB Kat LA 716 innerhalb von 3 min zugegeben und die Temperatur wurde auf 80°C erhöht und weitere 2 Stunden gerührt. Umsatzkontrolle wie bei 1a.1.

GPC: Mw: 27940 g/mol; Mn: 6183 g/mol; Mw/Mn: 4,52.

### Beispiel 1a.6:

Im analogen Versuchsaufbau und gleicher Versuchsführung wie unter 1a.1 wurden 71,8 g Vestanat HT 2500 LV mit 36,16 g Novares LS 500 und 28,1 g Stearylalkohol in 187 g Ethylacetat mit 1000 ppm TIB Kat 716 umgesetzt. 2/3 der NCO Gruppen waren umgesetzt. Die Temperatur wurde auf 70°C erhöht, es wurden 144,43 g eines Hydroxysiloxans mit der OHZ 51 mg KOH/g und 100 ppm TIB Kat LA 716 innerhalb von 3 min zugegeben und die Temperatur wurde auf 80°C erhöht und weitere 2 Stunden gerührt. Umsatzkontrolle wie bei 1a.1.

GPC: Mw: 31774 g/mol; Mn: 17612 g/mol; Mw/Mn:1,8.

### Beispiel 1a.7:

Im analogen Versuchsaufbau und gleicher Versuchsführung wie unter 1a.1 wurden 60,7 g Vestanat HT 2500 LV mit 59,5 g Stearylalkohol in 161 g n-Butylacetat mit 1000 ppm TIB Kat 716 umgesetzt. 2/3 der NCO Gruppen waren umgesetzt. Die Temperatur wurde auf 70°C erhöht, es wurden 122,21 g eines Hydroxysiloxans mit der OHZ 51 mg KOH/g und 100 ppm TIB Kat LA 716 innerhalb von 3 min zugegeben und die Temperatur wurde auf 80°C erhöht und weitere 2 Stunden gerührt. Umsatzkontrolle wie bei 1a.1.

GPC: Mw: 21425 g/mol; Mn: 8923 g/mol; Mw/Mn: 2,40.

### Beispiel 1a.8:

Im analogen Versuchsaufbau und gleicher Versuchsführung wie unter 1a.1 wurden 18,8 g Vestanat HT 2500 LV mit 18,4 g Stearylalkohol in 116,46 g Ethylacetat mit 1000 ppm TIB Kat 716 umgesetzt. 2/3 der NCO Gruppen waren umgesetzt. Die Temperatur wurde auf 70°C erhöht, es wurden 137,5 g eines Hydroxysiloxans mit der OHZ 14 mg KOH/g und 100 ppm TIB Kat LA 716 innerhalb von 3 min zugegeben und die Temperatur wurde auf 80°C erhöht und weitere 2 Stunden gerührt. Umsatzkontrolle wie bei 1a.1. Nach Abkühlung auf Raumtempertarur war das Produkt fest.

GPC: Mw: 19466 g/mol; Mn: 4558 g/mol; Mw/Mn: 4,21.

### Beispiel 1a.9:

Im analogen Versuchsaufbau und gleicher Versuchsführung wie unter 1a.1 wurden 55,26 g Vestanat HT 2500 LV mit 55,4 g Novares LS 500 in 73 g Ethylacetat mit 1000 ppm TIB Kat 716 umgesetzt. 2/3 der NCO Gruppen waren umgesetzt. Die Temperatur wurde auf 70°C erhöht, es wurden 97,73 g eines Hydroxysiloxans mit der OHZ 35 mg KOH/g und 100 ppm TIB Kat LA 716 innerhalb von 3 min zugegeben und die Temperatur wurde auf 80°C erhöht und weitere 2 Stunden gerührt. Umsatzkontrolle wie bei 1a.1.

GPC: Mw: 36900 g/mol; Mn: 15300 g/mol; Mw/Mn: 2,4.

### Beispiel 1a.10:

In einem beheizbaren Glaskolben mit mechanischem Rührer, Thermometer und Gaseinleitung wurden 27,63 g Vestanat HT 2500 LV, 23,1 g Novares LS 500 vorgelegt und 70,91 g Ethylacetat und 1000 ppm TIB Kat 716 zugegeben. Die Reaktionstemperatur wurde 3 Stunden bei 50°C gehalten. Im Anschluss wurde mittels einer entnommenen Probe der NCO Wert bestimmt. Erwartungsgemäß sind 2/3 der NCO Gruppen umgesetzt. Die Temperatur wurde auf 70°C erhöht, es wurden 55,5 g eines Hydroxysiloxans mit der OHZ 51 mg KOH/g und 100 ppm TIB Kat LA 716 innerhalb von 3 min zugegeben und die Temperatur wurde auf 80°C erhöht und weitere 3 Stunden gerührt. Der Ansatz wurde abgestellt und der vollständige Umsatz der verbliebenen NCO Gruppen wurde mittels einer finalen Probe kontrolliert.

GPC: Mw: 50700 g/mol; Mn: 23000 g/mol; Mw/Mn: 2,2.

### Beispiel 1a.11:

Im analogen Versuchsaufbau wie unter 1a.1 wurden 27,63 g Vestanat HT 2500 vorgelegt und 23,1 g Novares LS 500 und 55,5 g eines Hydroxysiloxans mit der OHZ 51 mg KOH in 70,91 g Ethylacetat mit 1000 ppm TIB Kat 716 bei Raumtemperatur zugegeben und die Mischung dann erwärmt. Die Reaktionstemperatur wurde 1 Stunde bei 50°C gehalten, anschließend 3 h bei 80°C. Der Ansatz wurde abgestellt und der vollständige Umsatz der verbliebenen NCO Gruppen wurde mittels einer finalen Probe kontrolliert.

GPC: Mw: 37800 g/mol; Mn: 19800 g/mol; Mw/Mn: 1,9.

### Beispiel 1a.12:

Im analogen Versuchsaufbau und gleicher Versuchsführung wie unter 1a.1 wurden 55,3 g Vestanat HT 2500 LV mit 44,0 g Myristylalkohol in 140,2 g Ethylacetat mit 500 ppm TIB Kat 716 umgesetzt. 2/3 der NCO Gruppen waren umgesetzt. Die Temperatur wurde auf 70°C erhöht, es wurden 111,1 g eines Hydroxysiloxans mit der OHZ 51 mg KOH/g und 100 ppm TIB Kat LA 716 innerhalb von 3 min zugegeben und die Temperatur wurde auf 80°C erhöht und weitere 2 Stunden gerührt. Umsatzkontrolle wie bei 1a.1. Nach Abkühlung auf Raumtemperatur war das Produkt fest.

GPC: Mw: 18400 g/mol; Mn: 8600 g/mol; Mw/Mn: 2,1.

### Beispiel 1a.13:

Im analogen Versuchsaufbau und gleicher Versuchsführung wie unter 1a.1 wurden 55,3 g Vestanat HT 2500 LV mit 48,6 g Cetylalkohol in 193,3 g Ethylacetat mit 500 ppm TIB Kat 716 umgesetzt. 2/3 der NCO Gruppen waren umgesetzt. Die Temperatur wurde auf 70°C erhöht, es wurden 111,1 g eines Hydroxysiloxans mit der OHZ 51 mg KOH/g und 100 ppm TIB Kat LA 716 innerhalb von 3 min zugegeben und die Temperatur wurde auf 80°C erhöht und weitere 2 Stunden gerührt. Umsatzkontrolle wie bei 1a.1. Nach Abkühlung auf Raumtemperatur war das Produkt fest.

GPC: Mw: 24800 g/mol; Mn: 10000 g/mol; Mw/Mn: 2,5.

### Beispiel 1a.14:

Im analogen Versuchsaufbau und gleicher Versuchsführung wie unter 1a.1 wurden 73,3 g Vestanat T 1890/100 mit 46,3 g Novares LS 500 in 154 g Ethylacetat mit 500 ppm TIB Kat 716 umgesetzt. 2/3 der NCO Gruppen waren umgesetzt. Die Temperatur wurde auf 70°C erhöht, es wurden 111,1 g eines Hydroxysiloxans mit der OHZ 51 mg KOH/g und 100 ppm TIB Kat LA 716 innerhalb von 3 min zugegeben und die Temperatur wurde auf 80°C erhöht und weitere 2 Stunden gerührt. Umsatzkontrolle wie bei 1a.1.

GPC: Mw: 40200 g/mol; Mn: 2700 g/mol; Mw/Mn: 14,8.

### Beispiel 1a.15:

Im analogen Versuchsaufbau und gleicher Versuchsführung wie unter 1a.1 wurden 55,3 g Vestanat HT 2500 LV mit 46,3 g Novares LS 500 in 128,5 g Ethylacetat mit 1000 ppm TIB Kat 716 umgesetzt. 2/3 der NCO Gruppen waren umgesetzt. Die Temperatur wurde auf 60°C erhöht, es wurden 45,6 g eines Aminosiloxans mit einem Stickstoffgehalt von 3,1 Gew.-% innerhalb von 3 min zugegeben und weitere 2 Stunden bei 70 °C gerührt. Umsatzkontrolle wie bei 1a.1.

GPC: Mw: 3300 g/mol; Mn: 860 g/mol; Mw/Mn: 3,9.

### Beispiel 1a.16:

Im analogen Versuchsaufbau und gleicher Versuchsführung wie unter 1a.1 wurden 55,3 g Vestanat HT 2500 LV mit 38,3 g Laurylalkohol in 136,4 g Ethylacetat mit 500 ppm TIB Kat 716 umgesetzt. 2/3 der NCO Gruppen waren umgesetzt. Die Temperatur wurde auf 70°C erhöht, es wurden 111,1 g eines Hydroxysiloxans mit der OHZ 51 mg KOH/g und 100 ppm TIB Kat LA 716 innerhalb von 3 min zugegeben und die Temperatur wurde auf 80°C erhöht und weitere 2 Stunden gerührt. Umsatzkontrolle wie bei 1a.1. Nach Abkühlung auf Raumtemperatur war das Produkt fest.

GPC: Mw: 18200 g/mol; Mn: 8500 g/mol; Mw/Mn: 2,2.

### Beispiel 1a.17:

Im analogen Versuchsaufbau und gleicher Versuchsführung wie unter 1a.1 wurden 55,3 g Vestanat HT 2500 LV mit 3,8 g Laurylalkohol und 39,6 g Myristylalkohol in 139,8 g Ethylacetat mit 500 ppm TIB Kat 716 umgesetzt. 2/3 der NCO Gruppen waren umgesetzt. Die Temperatur wurde auf 70°C erhöht, es wurden 111,1 g eines Hydroxysiloxans mit der OHZ 51 mg KOH/g und 100 ppm TIB Kat LA 716 innerhalb von 3 min zugegeben und die Temperatur wurde auf 80°C erhöht und weitere 2 Stunden gerührt. Umsatzkontrolle wie bei 1a.1. Nach Abkühlung auf Raumtemperatur war das Produkt fest.

GPC: Mw: 18500 g/mol; Mn: 8400 g/mol; Mw/Mn: 2,2.

### Beispiel 1, Synthesebeispiele, b) Biuret

### Beispiel 1b.1:

Im analogen Versuchsaufbau und gleicher Versuchsführung wie unter 1a.1 wurden 57,3 g Vestanat HB 2640 LV mit 46,3 g Novares LS 500 in 143,1 g Ethylacetat mit 1000 ppm TIB Kat 716 umgesetzt. 2/3 der NCO Gruppen waren umgesetzt. Die Temperatur wurde auf 70°C erhöht, es wurden 111,1 g eines Hydroxysiloxans mit der OHZ 51 mg KOH/g und 100 ppm TIB Kat LA 716 innerhalb von 3 min zugegeben und die Temperatur wurde auf 80°C erhöht und weitere 4 Stunden gerührt. Umsatzkontrolle wie bei 1a.1.

GPC: Mw: 13300 g/mol; Mn: 1300 g/mol; Mw/Mn: 10,5.

### Beispiel 2, anwendungstechnische Bespiele

Beispiel 2.1; Formulierung und Ausrüstung:
Das Emulgieren der Wirkstoffe wurde wie folgt nach 2 verschiedenen Methoden durchgeführt:
Methode 1: 6 bis 8 % der Wassermenge wurden mit Emulgatoren vorgelegt und gelöst. Der Wirkstoff wurde sukzessiv unter hoher Scherrate mit einer Mizer Scheibe (2000 U/min, entspricht ca. 8m/s Randgeschwindigkeit) Scherrate und Kühlung eingearbeitet. Es wurden 15 min bei hoher Scherrate unter Vakuum nachgerührt. Bei abnehmender Scherrate mit Wasser verdünnt, anschließend mit Acticide MBS konserviert und über ein 190 µm Schnellsieb filtriert und abgefüllt.
Methode 2: Verdünnen mit organischen Lösungsmittel (z.B. Ethylacetat, Butylacetat) gemäß der Wirkstoffkonzentrationen in der unten stehenden Tabelle und anschließendes Auftragen auf das Flächengebilde.

Alternativ zu den aufgeführten Methoden 1 und 2 kann das Emulgieren der Wirkstoffe auch unter Verwendung eines Ultraschallhomogenisators oder eines Spalthomogenisators auf die dem Fachmann bekannte Weise erfolgen.

**Tabelle 1: Zusammensetzungen der Formulierungen zur Anwendung auf Textilien und Holz, Angaben in Gew.-%, * beziehen sich auf die Zusammensetzungen der Tabelle 3**

| | *.1 | *.3 | *.4 | *.5 | *.6 | *.7 | *.2 | 4.2 | 4.3 |
|---|---|---|---|---|---|---|---|---|---|
| 1a.1 | | 40 | | | 20 | 20 | 2,0 | 8,8 | 8,8 |
| 1a.2 | | | 41,7 | | | | | | |
| 1a.3 | | | | 41,7 | | | | | |
| PCDI | | | | | 12,5 | 12,5 | | | |
| TG-580 (Wirkstoff) | 30 | | | | | | | | |
| Synperonic PE/F 108 | | 3 | 3 | 3 | 1,5 | 1,5 | | | |
| Acticide MBS | | 0,25 | 0,25 | 0,25 | 0,13 | 0,13 | | | |
| Butylacetat | | 10 | 8,3 | 8,3 | 5,0 | | 98,0 | 91,2 | |
| Ethylacetat | | | | | | | | | 91,2 |
| Dowanol TPM | | | | | | 5,0 | | | |
| Propylenglycol | | | | | 4 | 4 | | | |
| Wasser | 70 | 46,75 | 46,75 | 46,75 | 56,87 | 56,87 | | | |
| Methode | | 1 | 1 | 1 | 1 | 1 | 2 | 2 | 2 |

Foulardverfahren (Typ HVF, Mathis AG):
Zur Ausprüfung der jeweiligen Emulsionen wurde Baumwollgewebe (205 g/m²), Polyamidgewebe (65 g/m²) und Polyestergewebe (170 g/m²) mit einer Flotte, die jeweils 8 g/l der entsprechenden Emulsion enthielt, appliziert, auf ca. 70 - 80 Gew.-% Flottenaufnahme abgequetscht und getrocknet. Die angewendeten Werte für Druck und Geschwindigkeit sind in Tabelle 2 zu entnehmen. Die Auftragung im Foulard verlief bei Raumtemperatur.

**Tabelle 2: Beim Foulard Verfahren eingesetzte Drücke und Walzengeschwindigkeiten.**

| Bezeichnung | Druck [bar] | Geschwindigkeit [m/min] |
|---|---|---|
| Baumwollgewebe | 5,4 | 2 |
| Polyestergewebe | 1,0 - 1,2 | 2 |
| Polyamidgewebe | 1,0 | 1 - 2 |

Ausziehverfahren (Exhaust) Verfahren aus lösungsmittelhaltigen Formulierungen:
Zur Ausprüfung der jeweiligen erfindungsgemäßen Copolymere (Wirkstoffe) wurde Baumwollwirkware (205 g/m²), Polyamid (65 g/m²) und Polyester (170 g/m²) mit einer Flotte, die jeweils 20 g/l des entsprechenden Wirkstoffes enthielt, ausgerüstet. Es wurde ein Flottenverhältnis (Gewebe zu Flotte) von 1:15 gewählt. Verwendete Lösungsmittel sind Wasser, Butylacetat und Ethylacetat. Das Testgewebe wird für 30 min in der Flotte unter kontinuierlichem Schütteln auf der Schüttelplatte (Typ: 3006, Hersteller: GFL) behandelt. Nach 30 min wird das Testgewebe aus dem Bad entfernt, leicht ausgewrungen, aufgeschüttelt und getrocknet. Ein Blindwert wird unter den gleichen Bedingungen nur mit demineralisiertem Wasser behandelt.

Tropfverfahren (Holzapplikation):
Die Applikation der erfindungsgemäßen Copolymere (Wirkstoffe) auf die Holz Oberfläche verlief wie folgt: eine Lösung des Wirkstoffes (9%, Aktivgehalt) in Ethylacetat, Butylacetat oder Wasser, wurde mithilfe einer Spritze gleichmäßig auf der Oberfläche der Holzplatte (Maße: 5 cm x 5 cm) verteilt, so dass jede Platte mit 45 mg des Wirkstoffes beschichtet war. Der Blindwert wurde anhand einer unbehandelten Holzplatte ermittelt. Das fluorhaltige Referenzprodukt wurde in Wasser verdünnt, so dass die Konzentration des Aktivgehalts 90 g/l betrug. Die Platten wurden bei Raumtemperatur abdampfen gelassen und anschließend wie unten beschrieben getrocknet und fixiert. Die Applikation und Vermessung der Tropfen auf der Oberfläche verlief analog zu den Versuchen mit Textilien.

Trocknungsverfahren (Lab Dryer Typ LTE, Mathis AG, Ventilatordrehzahl 2000 U/min):
Die Flächengebilde wurden bei 105 °C (plus Verweilzeit, d.h. der Aufheizzeit des Textilgewebes) 2 min lang getrocknet und anschließend bei 160 - 180 °C (ohne Verweilzeit) für 0,5 - 1 min kondensiert um die Ausrüstung zu fixieren. Genaue Bedingungen:

| | Trocknung | | Fixierung | |
|---|---|---|---|---|
| | [°C] | [min] | [°C] | [min] |
| Baumwollgewebe (Exhaust) | 105 | 2,0 | 160 | 1,0 |
| Polyestergewebe (Exhaust) | 105 | 2,0 | 180 | 0,5 |
| Polyamidgewebe (Exhaust) | 105 | 2,0 | 180 | 0,5 |
| Baumwollgewebe (Foulard) | 105 | 2,0 | 150 | 3,0 |
| Polyestergewebe (Foulard) | 105 | 2,0 | 150 | 3,0 |
| Polyamidgewebe (Foulard) | 105 | 2,0 | 150 | 3,0 |
| Holz | 105 | 2 | 180 | 0,5 |

### Beispiel 2.2; Prüfung der Ausrüstung:

### Verfahren zur Kontaktwinkelmessung (Surftens Universal, OEG-GmbH) auf Textilien

In Anlehnung an die ISO/DIN 19403-6 und DIN EN ISO 14419, wurde die Wasserabweisung bzw. Ölabweisung wie folgt getestet: Die Textilien wurden mittels Foulard Applikation oder Auszugverfahren ausgerüstet, getrocknet und fixiert. Die Holzplatten wurden ebenfalls wie oben beschrieben ausgerüstet. Die ausgerüsteten Textilmuster wurden auf einem Stickrahmen mit ca. 8 cm Durchmesser aufgespannt. Dadurch bildeten sie eine, für die Kontaktwinkelmessung, ausreichend glatte Oberfläche. Der Spannring mit dem Textilgewebe wurde auf den Messtisch des Kontaktwinkelmessgerätes gelegt und fokussiert. Zum Vermessen der Holzplatten war dies nicht nötig, diese konnten wie vorhanden verwendet werden. Zur Bestimmung der Hydrophilie wurde auf das Textilgewebe anschließend ein Tropfen Wasser gegeben. Dabei ist entscheidend, dass der Tropfen aus geringer und konstanter Höhe auf das Textilgewebe fällt. Optimal hat sich dabei die Applikation mittels Eppendorf Pipette herausgestellt, mit einem festgelegten Tropfenvolumen von 15 µl vollentsalztem (VE) Wasser. Nach erfolgter Tropfenaufgabe wurde der Kontaktwinkel fortlaufend mittels Multi-Punkt-Analyse bestimmt. Hierbei wurde der Rand des Tropfens markiert und die Form des Tropfens nachgebildet. Dieser Vorgang wurde per Bildanalyse unmittelbar nach Auftrag des Tropfens ("0" Sekunden), nach 5, 15, 30, 60, 120, 180, 240 und 300 Sekunden durchgeführt. So ließ sich das Einsinkverhalten des Tropfens über 5 Minuten darstellen. Zur Bestimmung der Oleophobie wurde, analog wie oben beschrieben, ein Tropfen von 20 µl Weißöl (Sigma Aldrich (M8410), CAS 8042-47-5, Brookfield Viskosität bei 25 °C: 25,0 cps, Dichte: 0,86 g/cm³) appliziert. Das Verhalten gegenüber dem Muster wurde wie oben beschrieben dokumentiert. Bei beiden Testarten wurde der Kontaktwinkel gegen die jeweilige Zeit aufgetragen, wodurch die Hydrophobie bzw. Oleophobie grafisch sofort erkannt werden kann. Als Blindwert diente dazu passenderweise ein nicht-ausgerüstetes Muster. Nimmt der Kontaktwinkel über die Zeit ab sinkt der Tropfen ein, bleibt er konstant ist eine ausreichende Abweisung vorhanden. Ferner lässt sich über den Y-Achsenabschnitt eine weitere Unterscheidung ermöglichen. Je größer der Kontaktwinkel, desto größer die abweisende Wirkung der aufgetragenen Textilausrüstung.

### Spraytest

In Anlehnung an ISO 9073-17 oder gemäß AATCC Methode 22-2014 wurde die Wasserabweisung per Beregnungstest evaluiert (dynamische Wasserabweisung). Dazu wurde ein Gewebeabschnitt oder Teil eines Kleidungsstückes auf einer schiefen Ebene durch eine Brause aus 15 cm Höhe mit 250 ml Wasser beregnet und anschließend das Bild des anhaftenden Wassers bewertet. Dazu wurde eine Skala von 0 bis 100 verwendet, wobei 0 eine vollständige Benetzung bedeutet und 100 keinerlei Benetzung.

### Weichgriff

Der Weichgriff ist ein fundamentaler Qualitätsparameter eines Gewebes. Er kann durch z.B. Glätte, Kompressibilität, und Steifigkeit beschrieben werden. Normalerweise wird der Weichgriff durch subjektive Beurteilung über ein austesten per Hand bestimmt. Zusätzlich gibt es hierzu Messinstrumente die dies objektiv bestimmen.

Ein zugeschnittenes Stück Textilgewebe wurde nach vorheriger Konditionierung (4 Stunden) bei 25 °C und 50 % rel. Luftfeuchtigkeit in den TSA (Tissue Soft Analyzer, Fa Emtec Electronic GmbH) eingelegt und festgespannt. Das Messgerät ermittelt dann Einzelwerte für Weichheit, Glattheit und Steifigkeit des Textilgewebes und ermittelt daraus den Gesamteindruck, das Handgefühl (HF/Hand-Feel). Dieser HF-Wert wurde mittels einem Algorithmus, der Fa. EMTEC das speziell auf Textilien ausgelegt ist, ermittelt

### Waschtest:

In Anlehnung an DIN EN ISO 6330 erfolgte die Bestimmung der Waschbeständigkeit durch Waschen der Textilgewebe in einer haushaltsüblichen Waschmaschine (Vollwaschautomat Novotronic W918, Miele). Dazu wurde ein Standardwaschmittel vom Typ IEC A* (gemäß IEC 60456, *ohne Phosphat, Hersteller: WFK-Testgewebe GmbH) verwendet. Zusätzlich wurden 3 kg Baumwollgewebe als Ballast Stoff mit zum Waschgang gegeben.

Programm: Koch/Buntwäsche 40 °C, 19 g Waschmittel, Dauer eines Waschgangs: 2:02 h, Schleuderdrehzahl: 1200 U/min.

### Anwendungstechnische Ergebnisse:

**Tabelle 3: Geprüft wurden die folgenden Proben auf Baumwolle (1.1 bis 1.8), auf Polyester (2.1 bis 2.8), auf Polyamid (3.1 bis 3.8) und auf Holz (4.1 bis 4.4), Erläuterung der Probennummern (nach dem Punkt) wie in Tabelle 1 gezeigt**

| Probe | Nr. | | | |
|---|---|---|---|---|
| TG-580 | 1.1 | 2.1 | 3.1 | 4.1 |
| 1a.1 (Exhaust) | 1.2 | 2.2 | 3.2 | |
| 1a.1 (Foulard) | 1.3 | 2.3 | 3.3 | |
| 1a.1 in Butylacetat | | | | 4.2 |
| 1a.1 in Ethylacetat | | | | 4.3 |
| 1a.2 (Foulard) | 1.4 | 2.4 | 3.4 | |
| 1a.3 (Foulard) | 1.5 | 2.5 | 3.5 | |
| Mischung 1a.1/PCDI (in BuAc) | 1.6 | 2.6 | 3.6 | |
| Mischung 1a.1/PCDI (in TPM) | 1.7 | 2.7 | 3.7 | |
| Blank | 1.8 | 2.8 | 3.8 | 4.4 |

**Tabelle 4: Ergebnisse der Kontaktwinkelmessungen und des Spraytests für Baumwolle:**

| vor dem Waschen | | | | | |
|---|---|---|---|---|---|
| | Kontaktwinkel Wasser | | Spraytest | Kontaktwinkel Öl | |
| Nr. | 0 sec | 60 sec | | 0 sec | 60 sec |
| 1.1 | 130,6 | 128 | 50 | 120,5 | 1 122,9 |
| 1.2 | 127,8 | 127,4 | 90 | 81,5 | 0 |
| 1.3 | 106,3 | 95,3 | 60 | 60,5 | 0 |
| 1.4 | 117,2 | 114,6 | 80 | 77 | 0 |
| 1.5 | 100,7 | 0 | 0 | 81,7 | 0 |
| 1.6 | 125,0 | 123,8 | 75 | 64,9 | 0 |
| 1.7 | 131 | 132,1 | 80 | 80,8 | 0 |
| 1.8 | 0 | 0 | 0 | 27,8 | 0 |
| | | | | | |

| nach dem Waschen | | | | | |
|---|---|---|---|---|---|
| | Kontaktwinkel Wasser | | Spraytest | Kontaktwinkel Öl | |
| Nr. | 0 sec | 60 sec | | 0 sec | 60 sec |
| 1.1 | 88,9 | 0 | 0 | 72,3 | 0 |
| 1.2 | 103,9 | 78,4 | n.b. | 66,5 | 0 |
| 1.3 | 101,7 | 93,4 | 75 | 67,8 | 0 |
| 1.4 | 104,7 | 0 | 60 | 87,6 | 0 |
| 1.5 | 98,3 | 0 | 0 | 73,4 | 0 |
| 1.6 | 111,1 | 109,8 | 85 | 64,1 | 0 |
| 1.7 | 126,6 | 123,6 | 80 | 64,5 | 0 |
| 1.8 | 0 | 0 | 0 | 32,2 | 0 |

Wie in Tabelle 4 angeführt, erreichten die erfindungsgemäßen Copolymere annähernd die Wasserabweisung des fluorhaltigen Vergleichsproduktes (1.1), bzw. übertreffen nach dem Waschen diese sogar, wie die Proben enthaltend das Copolymer des Synthesebeispiels 1a.1 (1. 2, 1.3, 1.6 und 1.7) besonders verdeutlichen.

**Tabelle 5: Ergebnisse der Kontaktwinkelmessungen und des Spraytests für Polyester:**

| vor dem Waschen | | | | | |
|---|---|---|---|---|---|
| | Kontaktwinkel Wasser | | Spraytest | Kontaktwinkel Öl | |
| Nr. | 0 sec | 60 sec | | 0 sec | 60 sec |
| 2.1 | 130,6 | 129,5 | 100 | 125,3 | 124,2 |
| 2.2 | 128,9 | 125,9 | 90 | 71,3 | 22,5 |
| 2.3 | 138,4 | 135,1 | 80 | 98 | 22,5 |
| 2.4 | 131,2 | 127,8 | 70 | 79 | 0 |
| 2.5 | 127,5 | 127 | 70 | 84,1 | 0 |
| 2.6 | 123,9 | 122,9 | 90 | 74,6 | 29,9 |
| 2.7 | 132,2 | 132,8 | 85 | 82,1 | 25,5 |
| 2.8 | 112,9 | 113,9 | 75 | 48,7 | 0 |
| | | | | | |

| nach dem Waschen | | | | | |
|---|---|---|---|---|---|
| | Kontaktwinkel Wasser | | Spraytest | Kontaktwinkel Öl | |
| Nr. | 0 sec | 60 sec | | 0 sec | 60 sec |
| 2.1 | 129,6 | 129 | 80 | 121 | 119,9 |
| 2.2 | 128,8 | 130,3 | 80 | 89,7 | 39,7 |
| 2.3 | 129,8 | 128,9 | 80 | 86,1 | 30,6 |
| 2.4 | 124,9 | 124,4 | 80 | 79,9 | 0 |
| 2.5 | 122,4 | 121,9 | 50 | 83,1 | 0 |
| 2.6 | 128,6 | 126,6 | 85 | 94,5 | 38,4 |
| 2.7 | 131,3 | 131,6 | 80 | 88,9 | 26,2 |
| 2.8 | 87,1 | 0 | 0 | 44,3 | 0 |

Wie aus Tabelle 5 ersichtlich, übertrafen die erfindungsgemäßen Copolymere die Wasserabweisung des fluorhaltigen Vergleichsproduktes. Wie Beispiele 2.2 und 2.3 insbesondere verdeutlichen, wird auch eine ausreichende Ölabweisung erreicht. Ausreichende Ölabweisung bedeutet im Besonderen, dass der Kontaktwinkel sofort nach dem Auftrag deutlich größer ist als für die unbehandelte Stoffprobe und dass insbesondere nach 60 sec das Öl bevorzugt nicht vollständig eingesunken ist.

**Tabelle 6: Ergebnisse der Kontaktwinkelmessungen und des Spraytests für Polyamid:**

| vor dem Waschen | | | | | |
|---|---|---|---|---|---|
| | Kontaktwinkel Wasser | | Spraytest | Kontaktwinkel Öl | |
| Nr. | 0 sec | 60 sec | | 0 sec | 60 sec |
| 3.1 | 127,3 | 126,4 | 100 | 110 | 110,4 |
| 3.2 | 118,5 | 118 | 90 | 99,1 | 99 |
| 3.3 | 109,4 | 109,4 | 90 | 102,5 | 103,7 |
| 3.4 | 110,7 | 109,6 | 85 | 94,6 | 89,6 |
| 3.5 | 114,7 | 111,9 | 80 | 96,8 | 95,6 |
| 3.6 | 111,7 | 109,1 | 95 | 97,1 | 98,5 |
| 3.7 | 110,5 | 108,5 | 85 | 92,7 | 92,5 |
| 3.8 | n.b. | n.b. | n.b. | n.b. | n.b. |
| | | | | | |

| nach dem Waschen | | | | | |
|---|---|---|---|---|---|
| | Kontaktwinkel Wasser | | Spraytest | Kontaktwinkel Öl | |
| Nr. | 0 sec | 60 sec | | 0 sec | 60 sec |
| 3.1 | 108,7 | 107,2 | 90 | 94,4 | 93,8 |
| 3.2 | 96,8 | 95,8 | 80 | 96,2 | 81,2 |
| 3.3 | 105,1 | 105,3 | 80 | 96,7 | 95,6 |
| 3.4 | 108,6 | 108,1 | 80 | 92,1 | 71,5 |
| 3.5 | 108 | 106,9 | 80 | 98,7 | 70,3 |
| 3.6 | 104,8 | 104,8 | 90 | 88,2 | 87,6 |
| 3.7 | 102,1 | 102,6 | 80 | 84,7 | 80,9 |
| 3.8 | 89,6 | 86,5 | 70 | 89,2 | 85,2 |

Wie in Tabelle 6 präsentiert, übertrafen die erfindungsgemäßen Copolymere überraschenderweise sowohl die Wasser- als auch Ölabweisung des fluorhaltigen Vergleichsproduktes. Wie Beispiel 3. 3 zeigt, wurde eine hervorragende Wasser- und Ölabweisung, sowohl vor, als auch nach dem Waschen, erreicht.

**Tabelle 7: Ergebnisse der Kontaktwinkelmessungen für Holz:**

| | Kontaktwinkel Wasser | | Kontaktwinkel Öl | |
|---|---|---|---|---|
| Nr. | 0 sec | 60 sec | 0 sec | 60 sec |
| 4.1 | 129,7 | 125,1 | 96,7 | 96,7 |
| 4.2 | 85,8 | 85,5 | 58,9 | 57,8 |
| 4.3 | 86,2 | 85,9 | 59,4 | 58,2 |
| 4.4 | 59,7 | 32,5 | 36,1 | 9,9 |

Wie in Tabelle 7 dargestellt, bewirkte der erfindungsgemäße Wirkstoff eine Wasser- und Ölabweisung, so dass die jeweiligen Wasser- bzw. Öltropfen nicht auf dem Holz spreiteten.

**Tabelle 8: Werte des Handgefühls der textilen Flächengebilde (ohne Wäsche):**

| Handgefühl | | | |
|---|---|---|---|
| | Baumwolle | Polyester | Polyamid |
| *.1 | 47,6 | 58,6 | 50,8 |
| *.3 | 49,2 | 60,5 | 69,8 |
| *.4 | 47,9 | 62,5 | 76 |
| *.5 | 47,8 | 61,5 | 69,3 |
| *.6 | 48 | 60,7 | 67,6 |
| *.8 | 47,7 | 61,8 | 50,8 |

Wie in Tabelle 8 angegeben, verursachten die erfindungsgemäßen Wirkstoffe ein spürbar besseres Handgefühl der Stoffe als die fluorhaltige Vergleichsprobe. Die Proben enthaltend den Wirkstoff des Beispiels 1a.1 waren auf Baumwollgewebe am besten, wohingegen das Copolymer des Beispiels 1a.2 auf synthetischen Fasern die deutlichste Verbesserung des Handgefühls bewirkte.

## Patentansprüche

1. Copolymere umfassend oder bestehend aus, vorzugsweise bestehend aus, drei Komponenten,
Komponente a), die mindestens eine Biuret- oder Isocyanurat-Teilstruktur aufweist,
Komponente b), ausgewählt aus Polysiloxanen und Polykohlenwasserstoffen, vorzugsweise Polysiloxanen,
Komponente c), welche einen von Komponente b) unterschiedlichen Kohlenwasserstoff enthält, der mindestens 6 Kohlenstoffatome und höchstens 3 Heteroatome ausgewählt aus der Gruppe N, O, S aufweist,
wobei Komponente b) über mindestens zwei Positionen mit 2 unterschiedlichen oder gleichen Komponenten a) verknüpft ist, und
wobei die Copolymere frei von Isocyanatgruppen sind.

2. Die Copolymere nach Anspruch 1 weisen Polybutadien als Polykohlenwasserstoff der Komponente b) auf.

3. Die Copolymere nach einem der Ansprüche 1 und 2 sind frei von Halogenatomen, besonders bevorzugt frei von Fluoratomen und sind frei von Polyetherstrukturen, bevorzugt frei von aneinander gebundenen Oxyalkylen-Fragmenten.

4. Die Copolymere nach einem der Ansprüche 1 bis 3 weisen die Komponenten a) und Komponenten c) im Verhältnis von Anzahl c) dividiert durch Anzahl a) von 1 bis 3, mehr bevorzugt von 1,3 bis 2,7, besonders bevorzugt von 1,6 bis 2,4 und insbesondere bevorzugt von 1,8 bis 2,2 auf.

5. Die Copolymere nach einem der Ansprüche 1 bis 4 weisen in Komponente a) jeweils mehrere Biuret- oder Isocyanurat-Teilstrukturen auf, mehr bevorzugt von mehr als 1 bis zu 4, weiter mehr bevorzugt von 1,2 bis 3, besonders bevorzugt von 1,3 bis 2,5 und weisen insbesondere bevorzugt von 1,4 bis 2 Biuret- oder Isocyanurat-Teilstrukturen auf.

6. Die Copolymere nach einem der Ansprüche 1 bis 5 weisen als Komponente a) unabhängig voneinander gleiche oder verschiedene Biuret-Teilstrukturen der Formel (III) und Isocyanurat-Teilstrukturen der Formel(IV) 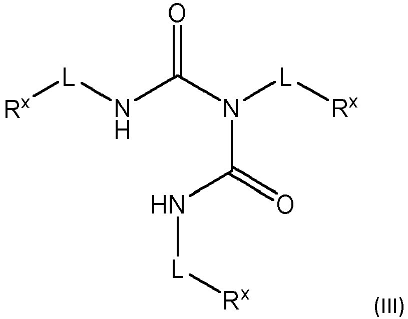 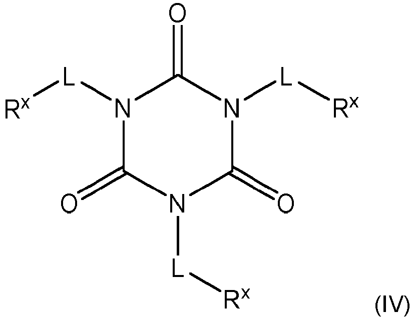 worin
L divalente Reste von Tolyl (2,4-; 2,6-), Ethylphenyl, 1,5-Naphthyl, α,ω-Tetramethylen, α,ω-Hexamethylen, α,ω-Dodecamethylen, α,ω-2-Methylpentamethylen, α,ω-2,2,4-Trimehtaylhexamethylen, Cyclohexyl (1,4-), 1Methylcyclohexyl (1,3-; 1,4-; 2,6-), 2,2,6-Trimethylcyclohexyl, Isophoron (3,3,5-Trimethylcyclohexyl), 4,4'-Dicyclohexylmethyl, 4,4'-Dicyclohexylpropan-(2,2), 4,4'-Diphenylmethan, vorzugsweise Hexamethylen, 4,4'-Diphenylmethan und Isophoron
R^{x} unabhängig voneinander die Bindungsstelle zu Komponente b) und Komponente c) ist,
und dabei im Falle der Bindung zu Komponente b) eine Urethangruppe oder Harnstoffgruppe darstellt,
und dabei im Falle der Bindung zu Komponente c) eine Urethangruppe, eine Harnstoffgruppe oder eine Thioharnstoffgruppe darstellt,
wobei diese Urethan-, Harnstoff- und Thioharnstoffgruppen über das Stickstoffatom an Formel (III) und Formel (IV) gebunden sind,
oder R^{x} stellt eine Bindung zu einer weiteren Biuret- oder Isocyanurat-Teilstruktur dar, wobei bevorzugt Biuret- mit Biuret-Teilstrukturen und bevorzugt Isocyanurat- mit Isocyanurat-Teilstrukturen verbunden sind;
und weisen als Komponente b) bevorzugt ein Polysiloxan der Formel (I) auf
M¹ₐ₁M²ₐ₂M³ₐ₃D¹_{b1}D²_{b2}D³_{b3}T_{c}Q_{d} (I)
mit
| | | | | | |
|---|---|---|---|---|---|
| M¹ | = [R¹₃SiO_{1/2}], | M² | = [R²R¹₂SiO_{1/2}], | M³ | = [R³R¹₂SiO_{1/2}], |
| D¹ | = [R¹₂SiO_{2/2}], | D² | = [R¹R²SiO_{2/2}], | D³ | = [R¹R³SiO_{2/2}], |
| T | = [R¹SiO_{3/2}], | | | | |
| Q | = [SiO_{4/2}], | | | | |
wobei
a1 0 bis 20, bevorzugt 1 bis 10, insbesondere 2 bis 5;
a2 0 bis 10, bevorzugt 0 bis 5, insbesondere 0;
a3 0 bis 20, bevorzugt 1-10, insbesondere 2 bis 5;
b1 1 bis 1000, bevorzugt 5 bis 500, insbesondere 10 bis 200;
b2 0 bis 10, bevorzugt 0 bis 5, insbesondere 0;
b30 bis 20, bevorzugt größer 0 bis zu 10, insbesondere 1 bis 5;
c 0 bis 10, bevorzugt größer 0 bis zu 5, insbesondere 1 bis 5;
d 0 bis 50, bevorzugt 0 bis 10, insbesondere 0 bis 2;
mit der Maßgabe, dass mindestens einer der Indices a3 und b3 größer 1, vorzugsweise die Summe von a3 und b3 mindestens 2 ist;
R¹ = unabhängig voneinander gleiche oder verschiedene lineare oder verzweigte, gesättigte oder ungesättigte Kohlenwasserstoffreste mit 1 bis 30 Kohlenstoffatomen oder aromatische Kohlenwasserstoffreste mit 6 bis 30 Kohlenstoffatomen, bevorzugt Alkylreste mit 1 bis 14 Kohlenstoffatomen oder monocylische Aromaten, weiterhin bevorzugt Methyl, Ethyl, Propyl oder Phenyl, insbesondere Methyl;
R² = unabhängig voneinander gleiche oder verschiedene lineare oder verzweigte, gesättigte oder ungesättigte, gegebenenfalls substituierte Kohlenwasserstoffreste, wobei bevorzugte Kohlenwasserstoffe mit 2 bis 30 Kohlenstoffatome, mehr bevorzugt 2 bis 16 Kohlenstoffatome aufweisen, wobei die Substituenten ausgewählt sein können aus Methoxy, Ethoxy, Propoxy, Butoxy, Pentoxy und Glycidyloxy, bevorzugt ist R² ein Glycidyloxy substituierter Alkylenrest mit 2 bis 6 Kohlenstoffatomen insbesondere bevorzugt ist R² ein Glycidyloxypropyl-Rest;
R³ = ist ein zweiwertiger Kohlenwasserstoff mit 2 bis 8 Kohlenstoffatomen, bevorzugt 2 bis 6, insbesondere bevorzugt 2 bis 3, dessen zweite Bindung die Bindungsstelle zu Komponente a) ist über bevorzugt eine Urethan oder Harnstoffgruppe;
und weisen als Komponente c) Kohlenwasserstoffe auf, die genau eine Bindungsstelle zu Komponente a) aufweisen, bevorzugt weisen die Kohlenwasserstoffe außer Kohlenstoff und Wasserstoff höchstens 3 Heteroatome auf, mehr bevorzugt höchstens 2 Heteroatome, besonders bevorzugt höchstens ein Heteroatom und insbesondere bevorzugt keine Heteroatome; falls Komponente c) Heteroatome aufweist, so sind diese bevorzugt ausgewählt aus der Gruppe N, O, S.

7. Die Copolymere nach Anspruch 6 weisen
in Komponente a) als divalenten Rest L in den Formeln (III) oder (IV) Hexamethylen, 4,4'-Diphenylmethan und Isophoron auf;
in Komponente b) ein Siloxan der Formel (I) auf mit den Indices
a3 2 bis 5
a1 gleich 0 bis 1
a2 gleich 0
b2 und b3 gleich 0
d gleich 0
R¹ Methyl oder Phenyl
in Komponente c) einen Kohlenwasserstoff auf, der frei von Heteroatomen ist und aromatische Ringe aufweist, bevorzugt einen oder mehrere Benzolringe, besonders bevorzugt weist einer der aromatischen Ringe die Bindungsstelle zu Komponente a) auf.

8. Verfahren zur Herstellung der Copolymere nach einem der Ansprüche 1 bis 7, wobei im ersten Schritt ein Zwischenprodukt die Komponenten a) und Komponenten c) aufweisend hergestellt wird und im zweiten Schritt die Zwischenprodukte zum Copolymer umgesetzt werden.

9. Zusammensetzungen enthaltend die Copolymere nach einem der Ansprüche 1 bis 8 Additive und/oder Hilfsstoffe.

10. Wässrige Emulsion enthaltend die Copolymere nach einem der Ansprüche 1 bis 7 oder die Verfahrensprodukte nach Anspruch 8 enthaltend Additive und/oder Hilfsstoffe.

11. Zusammensetzungen nach Anspruch 9 oder wässrige Emulsionen nach Anspruch 9 enthaltend als mindestens ein Additiv einen Booster ist, bevorzugt ein Polycarbodiimid.

12. Verwendung der Zusammensetzungen oder wässrigen Emulsionen nach einem der Ansprüche 9 bis 11 zur Ausrüstung von Flächengebilden.

13. Verfahren zur Flüssigkeits- und Schmutz-abweisenden Imprägnierung von textilen Flächengebilden durch Verwendung der Copolymere nach einem der Ansprüche 1 bis 7.

14. Verfahren zur Flüssigkeits- und Schmutz-abweisenden Imprägnierung von textilen Flächengebilden nach Anspruch 13 unter Verwendung der Zusammensetzungen nach Anspruch 11.

15. Phobierte textile Flächengebilde aufweisend die Copolymere nach einem der Ansprüche 1 bis 7 unter Erhalt oder Verbesserung der haptischen Eigenschaften.

## Claims

1. Copolymers comprising or consisting of, preferably consisting of, three components:
component a) having at least one biuret or isocyanurate substructure,
component b) selected from polysiloxanes and polyhydrocarbons, preferably polysiloxanes,
component c) comprising a hydrocarbon other than component b) and having at least 6 carbon atoms and
at most 3 heteroatoms selected from the group of N, O, S,
where component b) is joined to 2 different or identical components a) via at least two positions, and
where the copolymer is free of isocyanate groups.

2. The copolymers according to Claim 1 have polybutadiene as polyhydrocarbon of component b).

3. The copolymers according to either of Claims 1 and 2 are free of halogen atoms, more preferably free of fluorine atoms, and are free of polyether structures, preferably free of oxyalkylene fragments bonded to one another.

4. The copolymers according to any of Claims 1 to 3 have components a) and components c) in a ratio of number of c) divided by number of a) of 1 to 3, more preferably of 1.3 to 2.7, particularly preferably of 1.6 to 2.4 and especially preferably of 1.8 to 2.2.

5. The copolymers according to any of Claims 1 to 4 each have, in component a), two or more biuret or isocyanurate substructures, more preferably from more than 1 to 4, even more preferably from 1.2 to 3, particularly preferably from 1.3 to 2.5, and especially preferably have from 1.4 to 2 biuret or isocyanurate substructures.

6. The copolymers according to any of Claims 1 to 5 have, as component a), independently identical or different biuret substructures of the formula (III) and isocyanurate substructures of the formula (IV) 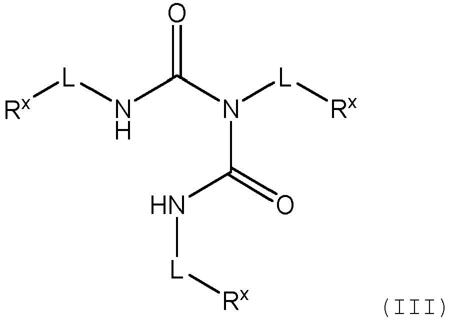 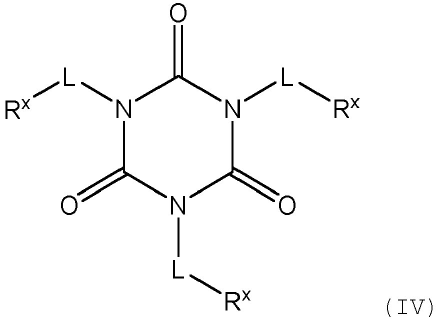 in which
L is divalent radicals of tolyl (2,4-; 2,6-), ethylphenyl, 1,5-naphthyl, α,ω-tetramethylene, α,ω-hexamethylene, α,ω-dodecamethylene, α,ω-2-methylpentamethylene, α,ω-2,2,4-trimethylhexamethylene, cyclohexyl (1,4-), 1-methylcyclohexyl (1,3-; 1,4-; 2,6-), 2,2,6-trimethylcyclohexyl, isophorone (3,3,5-trimethylcyclohexyl), 4,4'-dicyclohexylmethyl, 4,4'-dicyclohexylpropane-(2,2), 4,4'-diphenylmethane, preferably hexamethylene, 4,4'-diphenylmethane and isophorone,
R^{x} is independently the bonding site to component b) and component c), and denotes a urethane group or urea group in the case of the bond to component b), and denotes a urethane group, a urea group or a thiourea group in the case of the bond to component c), where these urethane, urea and thiourea groups are bonded via the nitrogen atom to formula (III) and formula (IV), or R^{x} denotes a bond to a further biuret or isocyanurate substructure, preferably with bonding of biuret substructures to biuret substructures and preferably of isocyanurate substructures to isocyanurate substructures;
and have, as component b), preferably a polysiloxane of the formula (I)
M¹ₐ₁M²ₐ₂M³ₐ₃D¹_{b1}D²_{b2}D³_{b3}T_{c}Q_{d} (I)
with
M¹ = [R¹₃SiO_{1/2]}, M² = [R²R¹₂SiO_{1/2}], M³ = [R³R¹₂SiO_{1/21},
D¹ = [R¹₂SiO_{2/2}], D² = [R¹R²SiO_{2/2}], D³ = [R¹R³SiO_{2/2}],
T = [R¹SiO_{3/2}],
Q = [SiO_{4/2}],
where
a1 0 to 20, preferably 1 to 10, especially 2 to 5;
a2 0 to 10, preferably 0 to 5, especially 0;
a3 0 to 20, preferably 1-10, especially 2 to 5;
b1 1 to 1000, preferably 5 to 500, especially 10 to 200;
b2 0 to 10, preferably 0 to 5, especially 0;
b3 0 to 20, preferably greater than 0 up to 10, especially 1 to 5;
c 0 to 10, preferably greater than 0 up to 5, especially 1 to 5;
d 0 to 50, preferably 0 to 10, especially 0 to 2;
with the proviso that at least one of the indices a3 and b3 is greater than 1, the sum total of a3 and b3 preferably being at least 2;
R¹ = independently identical or different linear or branched, saturated or unsaturated hydrocarbyl radicals having 1 to 30 carbon atoms or aromatic hydrocarbyl radicals having 6 to 30 carbon atoms, preferably alkyl radicals having 1 to 14 carbon atoms or monocyclic aromatics, further preferably methyl, ethyl, propyl or phenyl, especially methyl;
R² = independently identical or different linear or branched, saturated or unsaturated, optionally substituted hydrocarbyl radicals, where preferred hydrocarbons have with 2 to 30 carbon atoms, more preferably 2 to 16 carbon atoms, where the substituents may be selected from methoxy, ethoxy, propoxy, butoxy, pentoxy and glycidyloxy,
R² preferably being a glycidyloxy-substituted alkylene radical having 2 to 6 carbon atoms,
R² especially preferably being a glycidyloxypropyl radical;
R³ = is a divalent hydrocarbon having 2 to 8 carbon atoms, preferably 2 to 6, especially preferably 2 to 3, the second bond of which is the bonding site to component a) via preferably a urethane or urea group;
and have, as component c), hydrocarbons having exactly one bonding site to component a), the hydrocarbons preferably having, aside from carbon and hydrogen, not more than 3 heteroatoms, more preferably not more than 2 heteroatoms, particularly preferably not more than one heteroatom and especially preferably no heteroatoms; if component c) has heteroatoms, these are preferably selected from the group of N, O, S.

7. The copolymers according to Claim 6 have
in component a), as divalent L radical in the formulae (III) or (IV), hexamethylene, 4,4'-diphenylmethane and isophorone;
in component b), a siloxane of the formula (I) with the indices
| | |
|---|---|
| a3 | = 2 to 5 |
| a1 | = 0 to 1 |
| a2 | = 0 |
| b2 and b3 | = 0 |
| d | = 0 |
| R¹ | = methyl or phenyl |
in component c), a hydrocarbon which is free of heteroatoms and has aromatic rings, preferably one or more benzene rings, one of the aromatic rings particularly preferably having the bonding site to component a).

8. Process for preparing the copolymers according to any of Claims 1 to 7, wherein, in the first step, an intermediate comprising components a) and components c) is prepared and, in the second step, the intermediates are converted to the copolymer.

9. Compositions comprising the copolymers according to any of Claims 1 to 8 additives and/or auxiliaries.

10. Aqueous emulsion comprising the copolymers according to any of Claims 1 to 7 or the process products according to Claim 8 comprising additives and/or auxiliaries.

11. Compositions according to Claim 9 or aqueous emulsions according to Claim 9 comprising, as at least one additive, a booster, preferably a polycarbodiimide.

12. Use of the compositions or aqueous emulsions according to any of Claims 9 to 11 for finishing of fabrics.

13. Method of liquid- and soil-repellent impregnation of textile fabrics by using the copolymers according to any of Claims 1 to 7.

14. Method of liquid- and soil-repellent impregnation of textile fabrics according to Claim 13 using the compositions according to Claim 11.

15. Repellent textile fabrics comprising the copolymers according to any of Claims 1 to 7 with retention of or improvement in the tactile properties.

## Revendications

1. Copolymères comprenant ou constitués par, de préférence constitués par, trois composants,
le composant a), qui présente au moins une structure partielle de biuret ou d'isocyanurate,
le composant b), choisi parmi les polysiloxanes et les polyhydrocarbures, de préférence les polysiloxanes,
le composant c), qui contient un hydrocarbure différent du composant b) présentant au moins 6 atomes de carbone et au plus 3 hétéroatomes du groupe formé par N, O, S,
le composant b) étant lié par l'intermédiaire d'au moins deux positions à 2 composants a) identiques ou différents et les copolymères étant exempts de groupes isocyanate.

2. Copolymères selon la revendication 1, présentant du polybutadiène comme polyhydrocarbure du composant b).

3. Copolymères selon l'une quelconque des revendications 1 et 2, exempts d'atomes d'halogène, de manière particulièrement préférée exempts d'atomes de fluor, et exempts de structures polyéther, de préférence exempts de fragments oxyalkylène liés les uns aux autres.

4. Copolymères selon l'une quelconque des revendications 1 à 3, présentant le composant a) et le composant c) dans un rapport du nombre de c) divisé par le nombre de a) de 1 à 3, plus préférablement de 1,3 à 2,7, de manière particulièrement préférée de 1,6 à 2,4 et en particulier de préférence de 1,8 à 2,2.

5. Copolymères selon l'une quelconque des revendications 1 à 4, présentant dans le composant a) à chaque fois plusieurs structures partielles de biuret ou d'isocyanurate, plus préférablement plus de 1 à 4, encore plus préférablement de 1,2 à 3, de manière particulièrement préférée de 1,3 à 2,5 et en particulier de 1,4 à 2 structures partielles de biuret ou d'isocyanurate.

6. Copolymères selon l'une quelconque des revendications 1 à 5, présentant comme composant a) des structures partielles de biuret indépendamment identiques ou différentes les unes des autres de formule (III) et des structures partielles d'isocyanurate indépendamment identiques ou différentes les unes des autres de formule (IV) 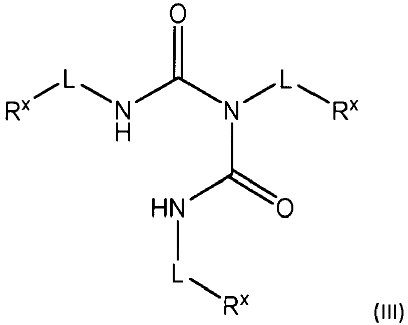 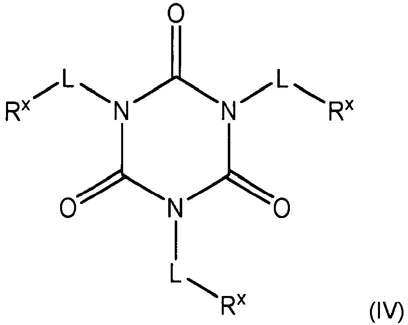 dans lesquelles
L représente des radicaux divalents de toluyle (2,4- ; 2,6-), d'éthylphényle, de 1,5-naphtyle, d'α,ω-tétraméthylène, d'α,ω-hexaméthylène, d'α,ω-dodécaméthylène, d'α,ω-2-méthylpentaméthyléne, d'α,ω)-2,2,4-triméthylhexaméthylène, de cyclohexyle (1,4-), de 1-méthylcyclohexyle (1,3- ; 1,4- ; 2,6-), de 2,2,6-triméthylcyclohexyle, d'isophorone (3,3,5-triméthylcyclohexyle), de 4,4'-dicyclohexylméthyle, de 4,4'-dicyclohexylpropane-(2,2), de 4,4'-diphénylméthane, de préférence d'hexaméthylène, de 4,4'-diphénylméthane et d'isophorone
R^{x} représente, indépendamment, le site de liaison au composant b) et au composant c), et représente, dans le cas de la liaison au composant b), un groupe uréthane ou urée, et représente, dans le cas de la liaison au composant c), un groupe uréthane, un groupe urée ou un groupe thio-urée, ces groupes uréthane, urée et thio-urée étant liés par l'intermédiaire de l'atome d'azote à la formule (III) et à la formule (IV),
ou R^{x} représente une liaison à une autre structure partielle de biuret ou d'isocyanurate, les structures partielles de biuret étant de préférence liées à des structures partielles de biuret et les structures partielles d'isocyanurate étant de préférence liées à des structures partielles d'isocyanurate ;
et présentant, comme composant b), de préférence un polysiloxane de formule (I)
**M¹ₐ₁M²ₐ₂M³ₐ₃D¹_{b1}D²_{b2}D³_{b3}T_{c}Q_{d}** **(I)**
dans laquelle
| | | | | | |
|---|---|---|---|---|---|
| M¹ | = [R¹₃SiO_{1/2}], | M² | = [R²R¹₂SiO_{1/2}], | M³ | = [R³R¹₂SiO_{1/2}], |
| D¹ | = [R¹₂SiO_{2/2}], | D² | = [R¹R²SiO_{2/2}], | D³ | = [R¹R³SiO_{2/2}], |
| T | = [R¹SiO_{3/2}], | | | | |
| Q | = [SiO_{4/2}], | | | | |
où
a1 vaut 0 à 20, de préférence 1 à 10, en particulier 2 à 5 ;
a2 vaut 0 à 10, de préférence 0 à 5, en particulier 0 ;
a3 vaut 0 à 20, de préférence 1 à 10, en particulier 2 à 5 ;
b1 vaut 1 à 1000, de préférence 5 à 500, en particulier 10 à 200 ;
b2 vaut 0 à 10, de préférence 0 à 5, en particulier 0 ;
b3 vaut 0 à 20, de préférence supérieur à 0 jusqu'à 10, en particulier 1 à 5 ;
c vaut 0 à 10, de préférence supérieur à 0 jusqu'à 5, en particulier 1 à 5 ;
d vaut 0 à 50, de préférence 0 à 10, en particulier 0 à 2 ;
à condition qu'au moins l'un des indices a3 et b3 soit supérieur à 1, de préférence que la somme de a3 et b3 vaille au moins 2 ;
R¹ = indépendamment les uns des autres, des radicaux hydrocarbonés identiques ou différents, linéaires ou ramifiés, saturés ou insaturés comprenant 1 à 30 atomes de carbone ou des radicaux hydrocarbonés aromatiques comprenant 6 à 30 atomes de carbone, de préférence des radicaux alkyle comprenant 1 à 14 atomes de carbone ou des aromatiques monocycliques, plus préférablement méthyle, éthyle, propyle ou phényle, en particulier méthyle ;
R² = indépendamment les uns des autres, des radicaux hydrocarbonés identiques ou différents, linéaires ou ramifiés, saturés ou insaturés, le cas échéant substitués, des radicaux hydrocarbonés préférés présentant avec 2 à 30 atomes de carbone, plus préférablement 2 à 16 atomes de carbone, les substituants pouvant être choisis parmi méthoxy, éthoxy, propoxy, butoxy, pentoxy et glycidyloxy, R² représente de préférence un radical alkylène comprenant 2 à 6 atomes de carbone substitué par glycidyloxy, de manière particulièrement préférée R2 représente un radical glycidyloxypropyle ;
R³ = un hydrocarbure divalent comprenant 2 à 8 atomes de carbone, de préférence 2 à 6, en particulier de préférence 2 à 3, dont la deuxième liaison est le site de liaison au composant a), de préférence par l'intermédiaire d'un groupe uréthane ou urée ;
et présentant, comme composant c), des hydrocarbures qui présentent exactement un site de liaison au composant a), de préférence, les hydrocarbures présentent, en dehors du carbone et de l'hydrogène, au plus 3 hétéroatomes, plus préférablement au plus 2 hétéroatomes, de manière particulièrement préférée au plus un hétéroatome et en particulier de préférence ils ne présentent pas d'hétéroatomes ; si le composant c) présente des hétéroatomes, ceux-ci sont de préférence choisis dans le groupe formé par N, O, S.

7. Copolymères selon la revendication 6, présentant dans le composant a), comme radical divalent L dans les formules (III) ou (IV), de l'hexaméthylène, du 4,4-diphénylméthane et de l'isophorone ;
dans le composant b), un siloxane de formule (I) présentant les indices
| | |
|---|---|
| a3 | =2 à 5 |
| a1 | =0 à 1, |
| a2 | =0, |
| b2 et b3 | = 0, |
| d | = 0, |
| R¹ | représente méthyle ou phényle |
dans le composant c), un hydrocarbure qui est exempt d'hétéroatomes et qui présente des cycles aromatiques, de préférence un ou plusieurs cycles benzène, de manière particulièrement préférée un des cycles aromatiques présente le site de liaison au composant a).

8. Procédé pour la préparation des copolymères selon l'une quelconque des revendications 1 à 7, où, dans une première étape, un produit intermédiaire présentant le composant a) et le composant c) est préparé et, dans une deuxième étape, les produits intermédiaires sont transformés en copolymère.

9. Compositions contenant les copolymères selon l'une quelconque des revendications 1 à 8, des additifs et/ou des adjuvants.

10. Émulsion aqueuse contenant les copolymères selon l'une quelconque des revendications 1 à 7 ou les produits de procédé selon la revendication 8, des additifs et/ou des adjuvants.

11. Compositions selon la revendication 9 ou émulsion aqueuse selon la revendication 9 contenant comme au moins un additif un booster, de préférence un polycarbodiimide.

12. Utilisation des compositions ou des émulsions aqueuses selon l'une quelconque des revendications 9 à 11 pour l'apprêt de structures planes.

13. Procédé pour l'imprégnation de structures planes textiles repoussant les liquides et les salissures par l'utilisation des copolymères selon l'une quelconque des revendications 1 à 7.

14. Procédé pour l'imprégnation de structures planes textiles repoussant les liquides et les salissures selon la revendication 13 à l'aide des compositions selon la revendication 11.

15. Structures planes textiles hydrofugées présentant les copolymères selon l'une quelconque des revendications 1 à 7 avec une obtention ou une amélioration des propriétés sensorielles.
